(19) Europäisches Patentamt / European Patent Office / Office européen des brevets

(11) **EP 4 660 585 A2**

## EUROPEAN PATENT APPLICATION

(12)

(43) Date of publication:
**10.12.2025 Bulletin 2025/50**

(21) Application number: **25181024.8**

(22) Date of filing: **05.06.2025**

(51) International Patent Classification (IPC):
*G01C 21/20* (2006.01)

(52) Cooperative Patent Classification (CPC):
**G01C 21/206**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.06.2024 US 202463656112 P**

(71) Applicant: **Zikitapp Ltd**
**4366248 Ra'anana (IL)**

(72) Inventors:
- **Elgrably, Gil**
  **2636200 Kiryat Motzkin (IL)**
- **Ben Simon, Avi**
  **5255204 Ramat Gan (IL)**

(74) Representative: **Harrison IP Limited**
**Mereside, Alderley Park**
**Congleton Road**
**Nether Alderley**
**Macclesfield, Cheshire SK10 4TG (GB)**

(54) **METHODS AND DEVICES FOR NAVIGATION ASSISTANCE IN AN ENCLOSED SPACE**

(57) A marker for indoor navigation, associated with information stored in a database in association with a key. The marker includes non-quadrilinear tessellating cells, a background surrounding the cells, and a frame surrounding the background, the frame being in a color that highly contrasts with the background. The plurality of cells is divided into four subsets, each being mutually exclusive from all the other subsets. A corner cells subset includes cells at the marker corners, which cells cover all the colors of the color palette. Cells in a first subset encode a numeric identifier, which can be decoded to access the information stored in the database. A second subset includes checksum cells encoding validation data. A third subset includes redundant cells, each matching, in its color, one of the corner cells.

FIGURE 1A

EP 4 660 585 A2

**Description**

FIELD OF THE INVENTION

The invention relates to the field of indoor navigation, and more particularly to methods and devices for improving the indoor navigation experience of a user, in particular a blind or visually impaired user.

BACKGROUND TO THE INVENTION

Over the years, various mechanisms have been developed to help with human navigation. These include, for example, Global Positioning Systems (GPS), that assists with human navigation, typically in outdoor environments. However, many such systems perform poorly in enclosed environments, and are therefore unsuitable for indoor navigation, such as navigation within shopping centers, museums, hospitals, and other large indoor campuses. Navigation within such environments presents unique challenges, particularly for individuals who are blind or have visual impairments and whose independence relies on accurate and context-aware orientation cues.

Over the years, various indoor navigation solutions have been proposed. Some of these solutions use beacons, such as WiFi or Bluetooth® beacons. Such beacons emit signals that are adapted to be detected by a mobile computing device carried by the user, allowing the mobile computing device to estimate proximity to the beacon. Each beacon is associated with a location, and as such, when the user comes into range of the beacon, the user device can notify the user of an estimated general location of the user. While helpful in identifying a general location, beacon systems are disadvantageous in that they are not capable of providing the user with meaningful information relating to the user's direction, or orientation, relative to the beacon source, or to a point of interest at which the beacon is located. Additionally, beacon based systems do not indicate the direction from which the user is approaching a beacon, which limits their usefulness for precise navigation, especially when the user is in proximity to multiple POIs, such as within a shopping center that may have many POIs close to each other.

Other solutions rely on visual markers, such as QR codes or ArUco markers. Each marker is associated with pre-generated information about a point of interest, which information is stored in a location accessible by scanning the marker. The markers are to be scanned by a user carrying a mobile computing device, such as a mobile phone, thereby to access the information associated with each marker. The markers are typically binary in nature, using only black and white, which inherently limits the number of unique codes available using such markers, and therefore restricts the information-carrying capacity. The binary visual design also makes such markers less detectable to users with low vision, particularly in visually cluttered or complex environments. Additionally, because binary markers are widely used for advertisements, promotions, and unrelated digital content, users may find it difficult to distinguish between a navigation marker and unrelated visual clutter. Furthermore, conventional markers generally provide static data associated with a single point of interest (POI) and do not support user orientation or path-level navigation through a venue.

Additionally, many indoor navigation aids require a pre-mapping phase, during which the venue is surveyed and digitally mapped. This process is time consuming, labor intensive, and expensive. Additionally, because such mapping is typically conducted by trained personnel or service providers, the scalability of such solutions is limited, and only a small number of venues can be mapped at any given time.

Furthermore, many indoor venues are often dynamic, and may change on a fairly regular basis. Retail spaces frequently undergo changes such as shop closures, renovations, or layout adjustments. Museums may rotate temporary exhibits, and public spaces can be reconfigured for events. For the map to continually be accurate, each such change in the layout of the venue may require re-mapping of the venue, or at least manual updates to the navigation system, increasing the maintenance burden and reducing the reliability of the system over time.

There is thus a need in the art for a marker-based navigation aid that enables identification of navigation-specific markers by a visually impaired user. There is further a need in the art for a marker-based navigation aid that can provide information about the distance and orientation of the user, relative to the marker, to assist visually impaired users. Furthermore, there is a need in the art for a navigation aid suitable for indoor navigation that does not require pre-mapping of a venue, and supports user interaction and navigation during mapping stages. Additionally, there is a need in the art for a navigation aid that supports the rapid and dynamic updates as a venue layout evolves, and can be readily updated and maintained.

SUMMARY OF THE INVENTION

In a first aspect of the invention, there is provided a marker for facilitating the navigation of an indoor space by a visually impaired user of a user-operated device, the marker being placeable in the indoor space and comprising a plurality of non-quadrilinear tessellating cells, each of the cells being in a color selected from a color palette of the marker, the color palette having N colors, where N is at least three; and wherein the colors of the cells encode a computer-readable numeric identifier associated with the marker, whereby the user can first make a visual identification of the marker and then scan it with their device to facilitate navigation of the indoor space. Preferably the colors are relatively high-contrast colors that can more easily be discerned by a person with a visual impairment. Preferably the colors are selected to be distinguishable to a person who has one type of color-blindness, or to people with all types of color-blindness. Preferably the numeric identifier uniquely identifies the marker within in a database of markers.

The present invention moves away from the twin technical prejudices in the art of using black and white for computer-readable codes (thereby providing maximum contrast for computer-based scanners) and also for using relatively high resolutions, for bar codes and QR codes and the like. It was discovered that using contrasting color cells, and non-quadrilinear cells in particular, improved the visibility of markers for people with visual impairments, whereas high resolution black and white codes tend to be less visually distinct, and to blend in with common colors used to decorate indoor spaces (especially white and greys), while the use of different colors and multiple cells provides enough resolution to encode a reasonable amount of computer-readable data. The present invention in particular benefits from the synergies of a marker that is both relatively visible to visually impaired people, so it can be identified in the first place, and to be capable of encoding computer-readable data that can be decoded at a distance. Other schemes may be able to encode more information and/or to encode information in a more compact format, but the further technical prejudice in the art that values these goals in fact mitigates against the usability (and visibility) of any markers that use those codes.

Preferably the cells consist of a plurality of subsets of cells, including: a corner cells subset located at the corners of the marker, such that at least one corner cell is colored in each of the colors of the color palette. This can assist in the computer scanning of the code, by providing both a check and a key to the colors in the code.

The plurality of subsets of cells may further include one or more of: an identifier subset encoding the numeric identifier in base N format; a checksum subset including cells encoding validation data relating to the cells in the identifier subset, and a redundant subset including redundant cells, each matching, in its color, one of the corner cells. The combination of any number of these elements increases the reliability of the system, and allows more easy scanning and interpretation of the code by a computer process. Preferably the marker further comprises a background surrounding the cells having a background color, and a frame surrounding the background, the frame being in a frame color that highly contrasts with the background color. The background color (and optionally the frame color) is preferably different to all colors in the color palette. Preferably, the colors in the color palette have approximately similar color values (within, for example, 5, 10, 15, 20, 30 or 50% of the value of each other color) and varying hues. Preferably the background color and the frame color have widely different values (for example, varying by more than 40, 50, 60, 70, 80 or 90%), such as black and white colors. This can create maximum visual contrast in some areas of the marker, to assist the visually impaired person in seeing a general outline, without affecting other portions of the marker (the cells) which are primarily processed by a computer process rather than by the visually impaired person.

In a second aspect of the invention, there is provided a marker as defined in the attached Claims 4 to 8.

Some embodiments of the disclosed technology relate to indoor navigation, and particularly to systems and methods for improving the indoor navigation experience of a user, in particular a blind or visually impaired user, without requiring pre-mapping of the venue being explored by the user.

Some embodiments of the disclosed technology make use of visually distinctive, color-coded markers that are scannable by a user-operated mobile device, and that encode and facilitate conveyance of identification information and spatial information about the surrounding environment.

In some embodiments, a marker-based navigation system includes markers, each of which is visually distinguishable from typical black-and-white codes such as QR or ArUco markers. The markers are formed of tessellated, non-quadrilinear colored cells (e.g., hexagonal cells) encoded with a multi-color palette of at least three colors, thereby enabling a larger code space and easier visual identification for users with low vision. These markers are placed at points of interest (POIs) throughout an indoor venue and are associated with digital content stored in a central or distributed database.

There are further provided a method and a device for detecting, decoding, and interpreting such markers using a mobile computing device operated by a user, such as a smartphone. The user device captures an image of the surrounding environment, detects the presence of a marker, corrects for perspective distortion, determines the marker's orientation and size, decodes the marker to extract a unique identifier, and accesses associated information from a database. The device then provides the user with output that may include details about the POI, as well as the user's distance and relative angle to the POI, based on the physical and perceived dimensions of the marker in the image.

In some embodiments, there are further provided a method and a system for collaborative, automated mapping of a venue by aggregating motion data from multiple users. Such a system collects user movement paths - optionally informed by marker interactions and sensor data - and connects them to form a path layout. Once sufficient data is gathered, the system generates a map of navigable paths within the venue, including accessibility metadata (e.g., suitability for wheelchair users or visually impaired individuals).

In some embodiments, a client (e.g., venue operator) may dynamically update marker-associated information or indoor maps. This can be done by submitting textual or sensor-based input via a client interface, allowing the system to adapt to changes in venue layout without the need for remapping by a specialized crew.

In some embodiments, there is further provided a location-aware and context-aware natural language model that can provide users with navigation instructions, POI descriptions, and answers to user queries. The model responses may be personalized based on a user's current position and accessibility needs. According to an aspect of some embodiments of the disclosed technology there is provided a marker for indoor navigation, the marker being printed on a printing substrate and associated with information stored in a database, the key to the information stored in the database being a decimal code. The marker includes a plurality of non-quadrilinear tessellating cells, each of the cells being in a color selected from a color palette of the marker, the color palette having N colors, where N is at least three, a square background surrounding the cells, and a square frame surrounding the background, the square frame being in a color that highly contrasts with the square background.

In some embodiments, the plurality of cells is divided into a corner cells subset, a first subset, a second subset, and a third subset, each of the subsets being mutually exclusive from all the other subsets. The corner cells subset includes cells at the corners of the marker, such that at least one corner cell is colored in each of the colors of the color palette. The first subset includes cells encoding a numerical identifier in base N, which can be decoded for accessing the information associated with the marker and stored in the database. The second subset includes checksum cells each forming a checksum of the numerical identifier in base N. The third subset includes redundant cells, each of the redundant cells matching, in its color, one of the corner cells.

There is further provided, according to an aspect of some embodiments of the disclosed technology, a method of obtaining information about a point of interest near a user, the information being associated with a marker disposed at the point of interest and stored in a database, the marker being a marker according to the disclosed technology. The method includes:

(a) receiving an image of the vicinity of the user;
(b) identifying the presence of a marker within the image;
(c) correcting the marker projection in the captured image;
(d) obtaining perceived dimensions of the marker, within the captured image;
(e) obtaining physical dimensions of the marker;
(f) estimating a distance of the device to the marker, and an angle of the device relative to the marker, based on the perceived dimensions of the marker and the physical dimensions of the marker;
(g) decoding the marker to obtain the numerical identifier in base N;
(h) converting the numerical identifier in base N to the decimal code;
(i) using the decimal code to extract the information associated with the marker from the database; and
(j) providing to the user, via an output interface of a user device, the information associated with the marker, as well as an estimate of the user's distance to the marker and angle relative to the marker. A non-exhaustive list of further dependent features is defined in the attached Claims 10 to 13.

In a further aspect of the invention, there is provided a method of creating or improving mapping data relating to an indoor space, comprising: receiving identifier data encoding a numeric identifier relating to a marker as aforesaid within the indoor space; receiving location data encoding at least one aspect of the location of the marker, or at least one aspect of the location of a user who has scanned the marker; and processing at least the received identifier data and the received location data, optionally in conjunction with additional data relating to the indoor space, to create or improve mapping data representing a map of the indoor space.

In a yet further aspect of the invention, there is provided a user-operated device for obtaining information about a point of interest near a user, the information being associated with a marker disposed at the point of interest and stored in a database, the marker being a marker as aforesaid, and the device comprising: an image capturing sensor adapted to capture an image of the marker; an output interface adapted to provide output to the user, the output including at least some of the information; a processor, functionally associated with the image capturing sensor, the output interface, and the database; and a non-transitory storage medium including computer program instructions which, when executed by the processor, cause the device to carry out a method as aforesaid.

There is further provided, according to an aspect of some embodiments of the disclosed technology, a device for automatically mapping a venue based on information collected from user devices, the user devices being in communication with the device via a network. The device includes a database, a network interface for communication with the user devices, a processor, functionally associated with the network interface and the database, and a non-transitory storage medium storing instructions to be executed by the processor. The non-transitory storage medium has stored:

(a) instructions to receive information about user motion within the venue, the information including at least some information based on user processing at least two visual markers, for example markers according to the disclosed technology;

(b) instructions to identify a path traversed by multiple users in the venue;
(c) instructions to connect paths identified by execution of instructions (b) to form a path layout for the venue;
(d) instruction to orient the path layout relative to the north; and
(e) instructions to generate a map of paths in the venue, that are usable by users, to assist in future user navigation of the venue.

In some embodiments, the map of paths in the venue includes multiple path segments, and each path segment is associated with accessibility information indicating accessibility of the path segment to people with different preferences or abilities.

There is further provided, according to an aspect of some embodiments of the disclosed technology, a computer implemented method of automatically mapping a venue based on information collected from user devices during motion of corresponding users within the venue. The computer implemented method includes:

(a) receiving information about user motion within the venue, the information including at least some information based on user processing at least two visual markers, for example markers according to the disclosed technology;
(b) identifying a path traversed by multiple users in the venue, the path being associated with at least one accessibility aspect;
(c) connecting identified paths to form a path layout for the venue;
(d) orienting the path layout relative to the north; and
(e) generating a map of paths in the venue, that are usable by users, to assist in future user navigation of the venue.

In some embodiments, wherein, the map of paths in the venue includes multiple path segments, and each path segment is associated with accessibility information indicating accessibility of the path segment to people with different preferences or abilities.

There is further provided, according to an aspect of some embodiments of the disclosed technology, a device for automatically assisting in user navigation within a venue, the device being in communication with a user device via a network. The device includes a database storing a path-map of the venue and a location aware language model, a network interface for communication with the user device, a processor, functionally associated with the network interface and the database, and a non-transitory storage medium storing instructions to be executed by the processor. The non-transitory storage medium has stored:

(a) instructions to receive user input, the user input including a request for instructions for navigation within the venue as well as information relating to an accessibility requirement of the user;
(b) instructions to compute, based on the path map of the venue and on input provided by the user, a path between two points within the venue, the path being optimized to the accessibility requirement of the user; and
(c) instructions to provide to the user the path between the two points within the venue, via an output interface of the user device.

There is further provided, according to an aspect of some embodiments of the disclosed technology, a computer implemented method of automatically assisting in user navigation within a venue, using a path map of the venue and a location aware language model. The computer implemented method includes:

(a) receiving user input including a request for instructions for navigation within the venue, as well as information relating to an accessibility requirement of the user;
(b) computing, based on the path map of the venue and on the user input, a path between two points within the venue, the path being optimized to the accessibility requirement of the user; and
(c) providing to the user the path between the two points within the venue, via an output interface of the user device.

The present invention may further comprise a computer readable medium encoding instructions which, when executed by one or more processors on a user device, cause the device to carry out a method as aforesaid. The present invention may further comprise a computer operable to receive data from a user-operated device as aforesaid (or otherwise) and to carry out a mapping process in dependence on the received data.

Unless otherwise defined, all technical and scientific terms used herein have the same meaning as commonly understood by one of ordinary skill in the art to which the disclosed technology pertains. In case of conflict, the specification, including definitions, will take precedence.

As used herein, the terms "comprising", "including", "having" and grammatical variants thereof are to be taken as specifying the stated features, integers, steps or components but do not preclude the addition of one or more additional features, integers, steps, components or groups thereof.

As used herein, the indefinite articles "a" and "an" mean "at least one" or "one or more" unless the context clearly dictates otherwise.

As used herein, when a numerical or spatial value is preceded by the term "about" or "approximately", the term "about" or "approximately" is intended to indicate a deviation of up to 10% from the numerical or spatial value.

As used herein, when a numerical or spatial value is preceded by the term "substantially", the term "substantially" is intended to indicate a deviation of up to 5% from the numerical or spatial value.

As used herein, the term "or" is used inclusively. As such, the phrase "A or B" includes "only A", "only B", and "A and B".

As used herein, the phrase "at least one of A and B" includes any one or more of the following options "at least one of A and none of B", "at least one of B and none of A" and "at least one of A and at least one of B".

As used herein, the phrase "at least one of A or B" is synonymous with the phrase "at least one of A and B".

BRIEF DESCRIPTION OF THE FIGURES

Some embodiments of the disclosed technology are described herein with reference to the accompanying figures. The description, together with the figures, makes apparent to a person having ordinary skill in the art how some embodiments of the disclosed technology may be practiced. The figures are for the purpose of illustrative discussion and no attempt is made to show structural details of an embodiment in more detail than is necessary for a fundamental understanding of the disclosed technology. For the sake of clarity, some objects depicted in the figures are not to scale.

In the Figures:

Figures 1A and 1B are schematic depictions of embodiments of tessellated colored markers for a marker-based navigation aid, according to embodiments of the disclosed technology;

Figures 2A, 2B, and 2C are schematic depictions of distribution of the markers of Figures 1A and 1B in several indoor venues, to be used as part of a marker-based navigation aid within those venues, according to embodiments of the disclosed technology;

Figure 3 is a schematic block diagram of a navigation aid system using the markers of Figures 1A and 1B, according to embodiments of the disclosed technology;

Figure 3A is a schematic block diagram of a storage medium of a user device forming part of the system of Figure 3, according to embodiments of the disclosed technology;

Figure 4 is a flow chart of a method for processing information encoded by and relating to the markers of Figures 1A and 1B, using the system of Figure 3, according to embodiments of the disclosed technology;

Figure 5 is a schematic block diagram of a storage medium of a server forming part of the system of Figure 3, according to embodiments of the disclosed technology;

Figure 6 is a flow chart of a method of mapping an indoor facility using marker-based information relating to paths traversed by users within the indoor facility and using the system of Figure 3 and the server of Figure 5, according to embodiments of the disclosed technology; and

Figure 7 is a flow chart of a method of providing a user with navigation aid information using the system of Figure 3, the user device of Figure 3A, and the server of Figure 5, according to embodiments of the disclosed technology.

DESCRIPTION OF SOME EMBODIMENTS OF THE DISCLOSED TECHNOLOGY

The disclosed technology, in some embodiments, relates to the field of indoor navigation, and more particularly to methods and devices for improving the indoor navigation experience of a user, in particular a blind or visually impaired user.

Specifically, some embodiments of the disclosed technology relate to tessellated colored markers to be used in a marker-based navigation aid for indoor navigation, and to methods and systems for processing such markers.

Some embodiments of the disclosed technology relate to systems and methods for interactively generating a map of an indoor venue based on data collected from users moving within the venue, for example using the marker-based navigation aid, without requiring active pre-mapping of the venue.

Some embodiments of the disclosed technology relate to a position aware and context aware machine-learning system and method for providing textual navigation instructions within a venue, and information relating to the venue, using natural language questions and responses.

The principles, uses and implementations of the teachings herein may be better understood with reference to the accompanying description and figures. Upon perusal of the description and figures present herein, one skilled in the art is able to implement the disclosed technology without undue effort or experimentation.

Before explaining at least one embodiment of the disclosed technology in detail, it is to be understood that the disclosed technology is not limited in its applications to the details of construction and the arrangement of the components and/or methods set forth in the following description and/or illustrated in the drawings and/or the Examples. The disclosed technology can be implemented with other embodiments and can be practiced or carried out in various ways. It is also understood that the phraseology and terminology employed herein is for descriptive purpose and should not be regarded as limiting.

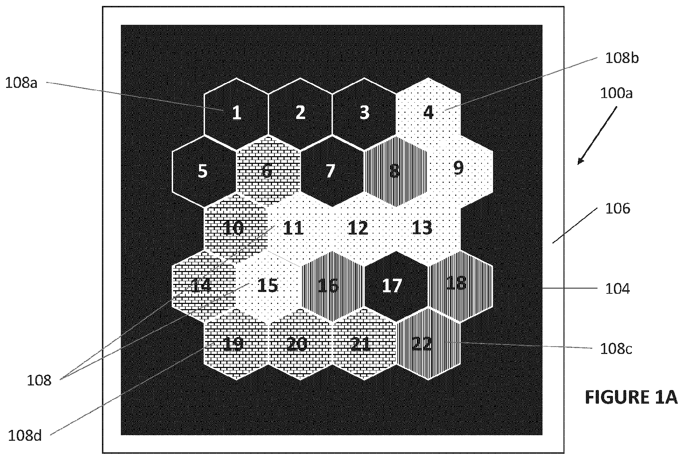

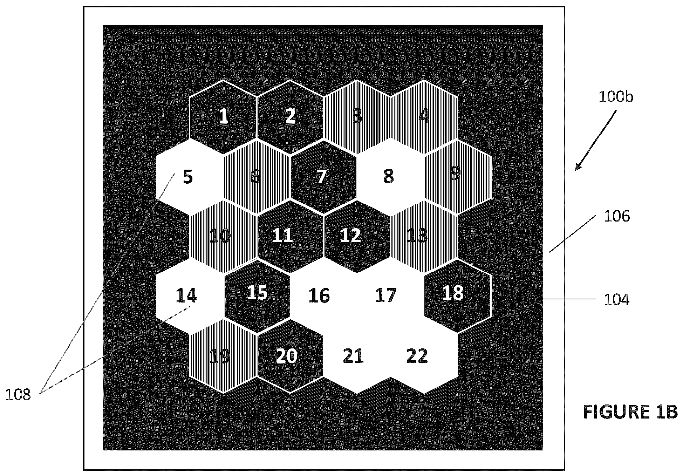

Reference is now made to Figures 1A and 1B, which are schematic depictions of embodiments of tessellated colored markers **100a** and **100b** for a marker-based navigation aid, according to embodiments of the disclosed technology.

As seen, each of markers **100a** and **100b** has a black background **104** surrounded by a white frame **106.** Within black background **104** are disposed a plurality of tessellated cells **108,** here shown as hexagonal cells. In the illustrated example each marker includes 22 such cells. However, other numbers of cells are considered within the scope of the disclosed technology. Each cell **108** is associated with a number reflecting its position within the marker, and with a color forming part of a color palette. In marker **100a,** the color palette includes four colors, indicated by black cells, brick-filled cells, dotted cells, and striped cells. In marker **100b,** the color palette includes three colors, indicated by black cells, white cells, and striped cells.

It is to be appreciated that the color indications provided in the present document are for illustrative purposes only, whereas, in actual implementation, the color palette of each marker includes three or more vivid and visually distinct colors. For example, the different cell markings of marker **100a** may actually reflect black, pink, yellow, and blue cells. Similarly, the different cell markings of marker **100b** may actually reflect black, white, and yellow cells.

The colors in the marker color palette are specifically selected to ensure that the colors are distinct enough from each other in the color spectrum as well as in the grey spectrum, to allow for easy identification of the colors by human users as well as good differentiation of the color clusters of cells, during processing of the marker. In some embodiments, each color in the color palette is represented by a numerical code, such that if the marker includes $N$ colors, the numerical codes range from 0 to $N-1$. For example, in marker 100a of Figure 1A, the colors are represented by the codes 0, 1, 2, and 3.

In some embodiments, the cell colors are selected to be distinguishable also by people with visual impairment or disabilities, such as being color blind.

It is to be appreciated that the vivid, and highly distinguishable colors of markers **100a** and **100b,** as well as the tessellated, and non-square, shape of the cells, make the markers easier for users, and in particular for visually impaired users, to identify in a visually busy environment. Additionally, the distinct nature of these markers makes it easier for the users, as well as for the system described in further detail hereinbelow, to identify that these markers are part of the navigation-aid system, and not product, advertisement, or promotion related markers, as are many other black-and-white Aruco and QR code markers in the environment.

Markers in accordance with the disclosed technology, such as markers **100a** and **100b,** have specific structural and/or colorimetric characteristics to assist in the detection, decoding, and validation of the markers, and in ensuring that the marker is in fact a marker according to the disclosed technology.

In some embodiments, a first subset of cells **108** represents index cells, which are decoded to form a decimal marker code, as explained hereinbelow. The first subset of cells typically includes at least ten cells, and in some embodiments includes 10-15 cells, and more specifically 12 cells of the marker.

In some embodiments, a second subset of cells **108** represents checksum cells. In some embodiments, the first subset and the second subset are mutually exclusive. The checksum cells are adapted to assist in validating the integrity of the decoded index cells, and in reducing the risk of decoding errors due to color misclassification. In some embodiments, the checksum cells are associated with a value, computed as a function of the index cell values (e.g., a modulus operation), following standard checksum practices.

In some embodiments, corner cells of the marker, indicated in Figure 1A as cells **108a, 108b, 108c,** and **108d,** are used to detect the physical size and the proper orientation of the marker, as explained in further detail hereinbelow. In some such embodiments, none of the cells in the first and second subsets is a corner cell. In some embodiment, particularly when the color palette of the marker has four or more colors, the corner cells are each a different color. If the color palette only has three colors, the corner cells would have one repetition.

In some embodiments, the dimensions of the marker may be encoded in the colors of the corner cells, as explained in further detail hereinbelow. In some embodiments, the color arrangement of the corner cells may indicate the correct orientation of the marker, as explained in further detail hereinbelow.

In some embodiments, the colors of the corner cells must follow a specific pattern, which assists in decoding the marker, extracting the orientation of the marker, and/or identifying the user's distance from and/or orientation relative to the marker. For example, in some markers, the top two corner cells must have the two highest color values (when measured in greyscale) and the bottom two corner cells must have the two lowest color values (when measured in greyscale).

In some such embodiments, colors of the corner cells are assigned based on a set of predefined orders, that map specific corner cells sequences to marker sizes. For example, in a base-3 marker in which marker colors are labeled by numerals 0, 1, and 2, valid sequences such as "0112", "0221", "0122", and "0211" may correspond to physical marker sizes of 200 mm, 100 mm, 50 mm, and 25 mm, respectively. Similarly, in base-4 markers, in which marker colors are labeled by numerals 0, 1, 2, and 3, valid sequences such as "0123", "0132", "1023", and "1032" may map to the same physical maker sizes.

The known possibilities of valid sequences of colors of the corner cells allow for identification of the orientation of a marker by rotating the marker until a known valid sequence is reached.

In some embodiments, the physical size of the marker is not encoded in the corner cells, but rather retrieved from a lookup table based on the decoded marker code (i.e., the decimal identifier obtained from the index cells). In this embodiment, the decoded identifier serves as a key for accessing marker metadata, including physical size, as explained in further detail hereinbelow. In such embodiments, the corner cells may be used exclusively for determining the orientation of the marker. This approach may enable more flexible encoding, avoidance of hardcoded constraints on color sequences, and facilitate the use of dynamic or programmable markers with metadata updated over time.

In some embodiments, a third subset of cells 108 represents redundant cells. In some embodiments, the number of cells in the third subset is equal to the number of corner cells, which, in the case of markers 100a and 100b, is four. The redundant cells in the third subset are not corner cells, and are also not included in the first or second subsets. As such, in some embodiments, each of the groups of cells listed herein is mutually exclusive.

The redundant cells in the third subset provide an additional safeguard against incorrect decoding of the marker, for example by ensuring correct reading of individual cell colors. In some embodiments, each redundant cell duplicates the color of a specific, pre-determined one of the corner cells, enabling the system to verify consistency between known positions, as explained in further detail hereinbelow.

For example, in some embodiments and as shown in Figures 1A and 1B, redundant cells 7, 10, 13, and 16 have the same colors as corner cells 1, 19, 4, and 22, respectively.

It is to be appreciated that the designation of each cell as a corner cell, an index cell, a checksum cell, or a redundant cell is predetermined, and this predetermined designation of the cells is used in decoding of the marker, as explained in further detail hereinbelow.

It is to be appreciated that different arrangements of the marker cells within the marker are considered within the scope of the disclosed technology. As such, the marker cells may be arranged in a different manner than that shown herein, in which case the number of corner cells and the number of redundant cells may vary. For example, the cells of the marker may be arranged in a hexagon shape rather than in four rows, resulting in six corner cells and six redundant cells.

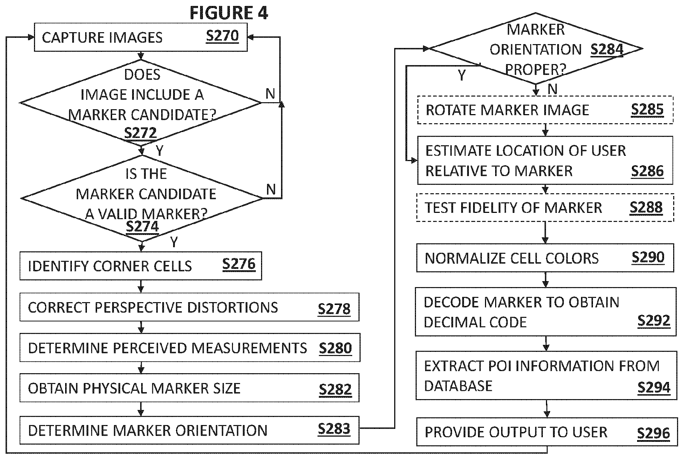

Use of the various types of cells in the process of decoding of markers 100a and 100b is described in further detail hereinbelow with respect to Figure 4.

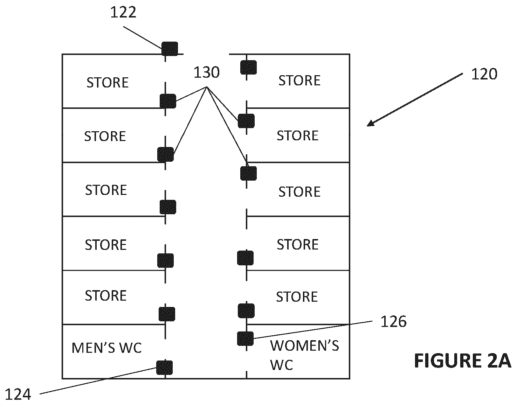

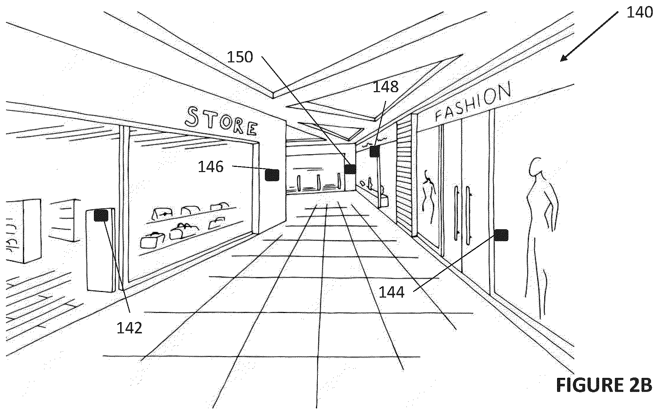

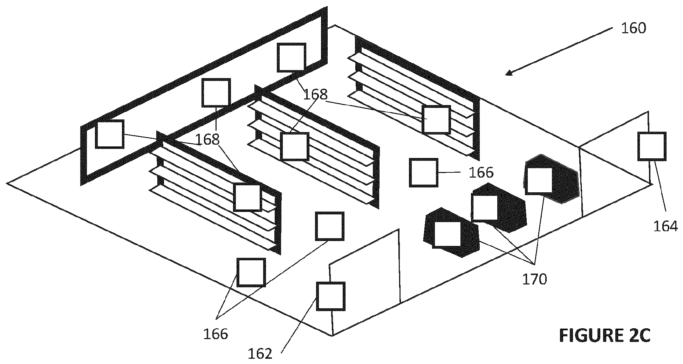

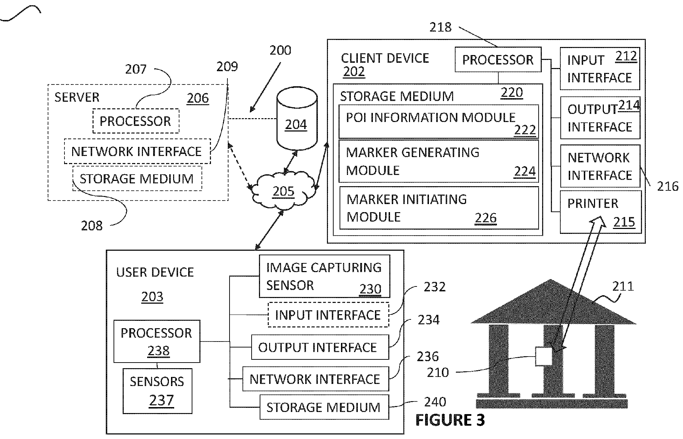

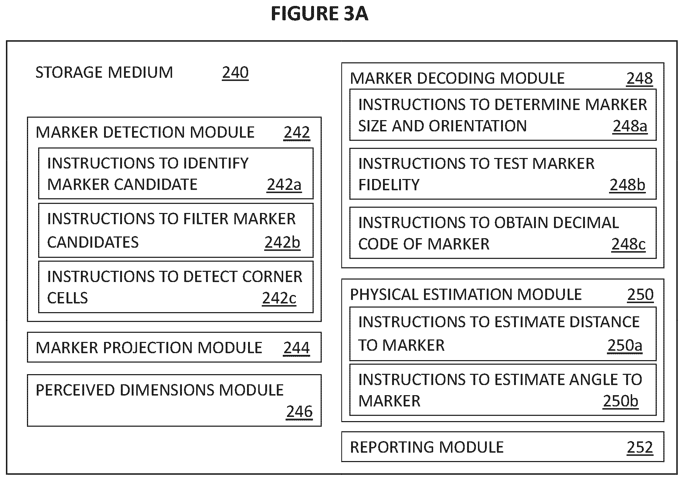

Reference is now made to Figures 2A, 2B, and 2C, which are schematic depictions of distribution of markers 100a and 100b of Figures 1A and 1B, or of markers according to the disclosed technology, in several indoor venues. As explained in further detail hereinbelow with respect to Figures 3-7, the markers are to be used as part of a marker-based navigation aid within those venues. In each of Figures 2A to 2C, markers 100 are associated with, and disposed at, different points of interest (POIs) within the depicted venue, to support real-time navigation and user orientation within the venue.

Figure 2A illustrates placement of markers 100 according to the disclosed technology, for example as described hereinabove with respect to Figures 1A and 1B, within a mall or shopping center 120. Figure 2A provides a schematic top view of mall 120, and of the placement of the markers, when assuming that the ceiling of the mall is removed. As seen, a first marker 122 is placed at the entrance to the mall, a second marker 124 is placed near the men's restroom, a third marker 126 is placed near the women's restroom, and additional markers 128 are placed at the entrance of each store 130 in the mall.

Figure 2B is a perspective view of the interior of a mall 140, which has markers 100 placed therein, according to embodiments of the disclosed technology. For example, one marker is placed at an entrance 142 to a bag store, and another is placed at an entrance 144 to a clothing store. A third marker is placed on a corridor wall 146, near a turn of the corridor, and additional markers are placed at entrances to additional stores 148 and 150.

Figure 2C is a schematic perspective view of a grocery store 160, which has a plurality of markers 100 disposed therein. A first marker is disposed at an entrance 162 to the store, and a second marker is disposed at an exit 164 from the store. Additional markers are disposed at the entrances to specific aisles 166 of the store, to assist a user in knowing which aisle they are facing. Some markers are disposed at specific shelves 168 of the stores, and/or in front of check-out counters 170 of the store. Further markers (not explicitly shown) may be disposed on specific products, to provide product information to the user.

As explained in further detail hereinbelow, markers of different physical sizes may be used at different times, or in different placements. For example, the physical dimensions of a specific marker within the venue may depend on the typical user distance from the marker, when the marker is scanned.

For example, large markers may be used in locations that can typically be seen from far away (e.g., at an entrance to a mall or store), whereas smaller markers may be used in locations that are typically viewed from a shorter range (e.g., on specific shelves of a store, or displays of a museum). Medium size markers may be used in locations viewed from some interim distance, such as in corridors or aisles.

In some embodiments, large markers are viewable at a distance of 2-20 meters, medium size markers are viewable at a distance of 1-10 meters, small markers are viewable in short range, for example at a distance of 0.5-2 meters.

In some embodiments, and as explained in further detail hereinbelow, the dimensions of the marker may be encoded in the corner cells of the marker. In some other embodiments, the dimensions of the marker may be stored as part of the content associated with the index of the marker, as explained in further detail hereinbelow. In such embodiments, the corner cells serve only to determine the orientation of the marker, as explained herein. The number of sizes available for markers is determined in part by the mechanism in which the physical marker size, is encoded, as explained in further detail herein.

As explained in further detail hereinbelow, a user entering a venue, such as mall **120,** mall **140,** or grocery store **160,** uses a mobile computing device, such as their smart mobile phone, to scan their vicinity and capture images thereof. The captured images include markers **100** at POIs, and the system then decodes the markers as described hereinbelow with respect to Figures 3-4. The system then provides to the user, on an output interface of the computing device, information relating to the POI, to the user's distance from the marker and/or the POI, and to the user's spatial orientation relative to the marker and/or the POI (e.g., "the POI is 5 meters away from you, at an angle of 10 degrees to your right"). The user may continue to scan the markers as they traverse the venue, to obtain information about additional POIs, and to assist in mapping of the venue, as explained in further detail herein.

It is to be appreciated that information may be provided to the user regarding a POI, their distance from the POI, and their orientation relative to the POI, even prior to complete mapping of the venue. As such, the markers of the disclosed technology may be generated (i.e., information associated with the marker is stored in a database and the marker is printed in a suitable size) and placed in the venue by a venue owner or operator (also termed the client). The user may immediately start to use the markers to obtain information about the venue and its contents. No pre-mapping of the venue is required.

In some embodiments, use of the markers prior to complete mapping of the venue may assist in generating a more detailed, or complete, map of the venue, as explained in further detail hereinbelow.

It is to be appreciated that navigation within an enclosed venue, such as a mall, grocery store, or museum, using the markers of the disclosed technology, is possible without requiring use of GPS, whose signal is often degraded, or completely blocked, by large structures.

In some embodiments, when the venue is mapped, for example using a mapping method using the markers in accordance with the disclosed technology as described hereinbelow, the user may provide to the system a list of POIs in which they are interested. For example, the venue may be a mall, and the user may provide to the system a notification saying "I need to visit the shoe store, the book store, and the pharmacy". As another example, the venue may be a grocery store, and the user may input into the system their grocery list.

Knowing the specific POIs that the user wishes to reach within the previously mapped venue, upon identifying that the user has reached the entrance to the venue by the user scanning the marker associated with the entrance, the system may provide to the user directions for reaching the desired POIs. The user may continue to scan the markers while following the directions to the desired POIs, to provide additional input to the system enabling the system to provide real time instructions as the user traverses the venue.

Reference is now made to Figure 3, which is a schematic block diagram of a navigation aid system 200 associated with the markers of Figures 1A and 1B, according to embodiments of the disclosed technology. System **200** includes a plurality of client devices **202,** a plurality of user devices **203,** and a database **204.** The client devices **202** and user devices **203** are, or can be, in communication with database **204** via one or more packet-switched networks **205,** such as a local area network (LAN), a wide area network (WAN), or the Internet.

In some embodiments, database **204** may be associated with a server **206,** including a processor **207** and a storage medium **208** for storing instructions to be carried out by the processor **207.** Server **206** may further include a network interface **209,** facilitating communication of client devices **202** and/or of user devices **203** with server **206** and/or with processor **207** thereof, via network(s) **205.**

In some embodiments, the communication is continuous, and some operations of the client devices and/or the user devices may be carried out by communicating with the database in real time. In some other embodiments, at least the communication of the user devices with the database is periodic, such that the user devices periodically download a copy of the database to be stored locally on the user device, via the network. This is advantageous in that it enables the user device to access the content of the database also from locations in which the communication network is interrupted, such as basements, during travel, and the like.

Each client device **202** is adapted for generating one or more markers **210,** for example as shown in Figures 1A and 1B, each marker encoding information relating to a POI **211** at which the marker is to be placed by the client. In some embodiments, a client device may also be adapted for associating information, within database **204,** with one or more beacons to be placed at POI **211.**

As seen in Figure 3, each client device includes at least one input interface **212,** such as a keyboard, touchpad, touchscreen, and/or mouse, adapted for receiving input from the client. The input provided by the client relates to a POI to be associated with a marker being generated. For example, the input may include the size of the marker to be generated, information relating to the specific POI, and/or information relating to additional POIs in the vicinity of the POI.

Each client device further includes at least one output interface **214,** such as a screen or a speaker, adapted for providing output to the client. The output may include prompts calling the client to action (e.g., "provide information about the POI to be associated with this marker", "confirm that the information is correct"), and/or questions to be answered by the client (e.g., "what size marker do you want to generate?"). Typically, each client device **202** further includes, or is further associated with, a printer **215,** adapted for printing marker(s) **210** generated by the client device, in color, on a printing substrate (e.g., paper, paperboard, Bristol board, cardboard, plastic crafting sheets, and the like).

Each client device includes at least one network interface **216,** such as a transceiver, enabling the client device to communicate with database **204** via network(s) **205.**

In some embodiments, client device **202** may further include additional sensors **217,** such as a three-dimensional orientation sensor (e.g., accelerometer, gyroscope), a pressure sensor, an inertia sensor, a magnetic sensor, and the like.

Each client device **202** includes at least one processor **218** and at least one storage medium **220** storing computational modules, or instructions, to be executed by processor(s) **218.** Processor(s) **218** is functionally associated with input interface **212,** output interface **214,** printer **215,** network interface **216,** and sensor(s) **217.**

Storage medium **220** may store a plurality of software modules, each of which may be associated with one or more instructions, to be executed by processor(s) **218,** to achieve a specified result.

Storage medium **220** has stored a POI information module **222,** which includes instructions to collect from the user (e.g., via the input interface(s)), and possibly from other publicly available resources (websites, etc.) information relating to a specific POI for which a marker is being generated. The POI information module **222** further includes instructions to receive confirmation from the client for the collected information.

Storage medium **220** further has stored a marker generating module **224,** which includes instructions to receive from the user (e.g., via the user interface(s)), information relating to dimensions of a marker to be generated. In some embodiments, the information relating to the size may be information relating to the type of POI at which the marker is to be placed, and that type of POI may be automatically mapped, or converted, to specific marker dimensions by the marker generating module, for example based on predefined marker-type conditions. In some embodiments, the information relating to the size may be information relating to the distance from which the marker should be visible, and that distance may be automatically mapped, or converted, to specific marker dimensions by the marker generating module, for example based on predefined marker-distance conditions. In some embodiments, the information relating to the size may be the specific marker dimensions of the marker to be generated.

Marker generating module **224** further has stored instructions to generate the tessellated colored shapes of the marker to be placed at the POI. These instructions include instructions to select (or receive as input) the color palette, and to generate the cells of the marker, while ensuring that the cell types and cell arrangement meet the marker requirements, as explained herein (e.g., that the corner cells have the required color sequence, that the corner cells properly encode the dimensions of the marker, that the redundant cells are indeed redundant, in the predefined manner, of the corner cells, and/or that the checksum cells indeed form a checksum of the index cells). The generated marker has a decimal identifier, which is associated with the index cells, as explained in further detail hereinbelow.

Storage medium **220** further has stored a marker initiating module **226,** which receives the output of POI information module **222** and of marker generating module **224.** Marker initiating module **226** includes instructions to deliver to database **204** the decimal identifier of the marker to be used as a key, and the collected POI information, to be stored in the database in association with that key. Marker initiating module **226** further includes instructions to cause printer **215** to print the marker, including the tessellating shapes and colors thereof, onto a printing substrate, to be hanged by the client at the POI.

Once the marker initiating module **226** has completed its operation, the marker is printed and is ready for scanning and processing by a user device, as explained in further detail herein.

Each user device **203** is adapted for processing one or more markers **210,** for example as shown in Figures 1A and 1B. User device **203** is a mobile user device, such as a smart phone, smart watch, or other mobile computing device carried by the user.

As seen in Figure 3, each user device includes an image capturing sensor **230** (e.g., a camera, a video camera, etc.), adapted to capture image of the vicinity of the user, which images may include one or more markers **210.** Image capturing sensor **230** may be disposed on any surface of the user device, such as a rear facing surface thereof.

In some embodiments, user devices may include at least one input interface **212,** such as a keyboard, touchpad, touchscreen, and/or mouse, adapted for receiving input from the user. As explained in further detail hereinbelow, in some such embodiments, the input may relate to a list of locations, or POIs, that the user wishes to reach.

Each user device further includes at least one output interface **234,** such as a screen or a speaker, adapted for providing output to the user. Typically, for blind or visually impaired users, the output interface is adapted to provide tactile output and/or audio output, perceivable by the blind or visually impaired user. As explained in further detail hereinbelow, the output interface is adapted to provide output relating to one or more POIs in the vicinity of the user, which output is the result of processing of one or more markers present in images captured by the image capturing sensor **230.** The output may include information relating to the POI (e.g., "this is the entrance to a Gap® store"), information relating to another POI in the vicinity of the user (e.g., "this is the entrance to the men's restroom, the entrance to the women's restroom is 2 meters to the right"), and/or information relating to the location of the user relative to the POI (e.g., "aisle 3, which houses wine, is 2 meters away at a 45 degree angle to the left of you").

Each user device **203** includes at least one network interface **236,** such as a transceiver, enabling the client device to communicate with database **204** via network(s) **205**. In some embodiments, the network interface also includes at least one short range receiver or transceiver, suitable for detecting beacons, such as a Bluetooth or Bluetooth Low Energy (BLE) transceiver.

In some embodiments, user device **203** may further include additional sensors **237,** such as a three-dimensional orientation sensor (e.g., accelerometer, gyroscope), a pressure sensor, an inertia sensor, a magnetic sensor, and the like.

Each user device **203** includes at least one processor **238** and at least one storage medium **240** storing computational modules, or instructions, to be executed by processor(s) **238**. Processor(s) **238** is functionally associated with image capturing sensor **230,** output interface **234,** and network interface **236.**

Storage medium **240** may store a plurality of software modules, each of which may be associated with one or more instructions, to be executed by processor(s) **238,** to achieve a specified result.

Reference is now additionally made to Figure 3A, which is a schematic block diagram illustrating storage medium **240.**

As seen in Figure 3A, storage medium **240** has stored a marker detection module **242,** which includes instructions **242a** to receive an image from image capturing sensor **230,** and to identify whether the image includes a marker or a marker candidate. A marker candidate may be considered to be an object having hexagons in more than two colors, surrounded by a solid color background, further surrounded by a solid color frame of a color having high contrast from the background.

In some embodiments, the instructions to identify the presence of a marker, or marker candidate, may include use of various prior art image processing techniques, such as YOLO, commercially available from Ultralytics Inc. of Frederick, MD, USA, to identify the presence of a marker, such as markers **210**. In some embodiments, the instructions may include instructions devised by machine-learning during a pre-use training step of the marker detection module **242.**

In some embodiments, the instructions may further include instructions **242b** to filter away any marker candidates in which a dark frame surrounds a lighter background. Such identification may be carried out using sampling of pixel points on the frame and the background, and accepting only candidates having a frame pixel value within a first predetermined range, and a background pixel value within a second predetermined range.

Marker detection module **242** may further include instructions **242c** to detect corner cells of the marker, or of the marker candidate. In some embodiments, the instructions to detect the corner cells may include instructions to implement an edge detection algorithm, or a process based on specific algorithms, such as process based on the Ramer Douglas Peucker (RDP) algorithm.

Storage medium **240** further has stored a marker projection module **244,** which includes instructions to normalize the projection, or appearance, of the marker, despite any warping it may have due to being placed on a non-linear surface of due to camera angles. The resulting marker is square, and is suitable for processing. In some embodiments, the instructions to correct the projection of the marker include instructions to apply geometrical transformation to the marker, and specifically to corners of the frame of the marker, converting the frame into a square.

In some embodiments, the marker projection module includes instructions to correct the projection of the marker even if it is placed on a curved, or non-planar, surface. In some embodiments, these instructions include using, in addition to the corners of the frame, additional points at known intervals along the frame, and dividing the image of the marker into segments by passing virtual lines through the additional points and edges of the frame. The instructions further include projecting each segment onto a planar surface, and merging the segments to form the normalized marker.

In some embodiments, the instructions stored in module marker projection module **244** include instructions to match a portion of the frame of the marker to a function, such as a parabola, to assist in normalizing of the marker.

Storage medium **240** further has stored a perceived dimensions module **246,** which includes instructions to estimate the perceived dimensions of the marker. The instructions to estimate the perceived dimensions of the marker include instructions to fit an ellipse to the corners of the marker identified by the marker detection module, in the image space, to estimate the physical size of the marker and validate its geometry. In some embodiments, these instructions are adapted to extract the marker size, in pixels, under the conditions of projection invariance, applied by the ellipse.

Storage medium **240** further has stored a marker decoding module **248,** which includes instructions **248a** to determine the marker size and orientation, instructions **248b** to test fidelity of the marker, and instructions **248c** to decode the decimal identifier of marker.

Instructions **248a** include instructions to determine the marker orientation, which may include instructions to identify the orientation of the marker based on application of virtual grid lines to the normalized marker image. For example, in some embodiments, the virtual grid lines may be applied to extend along the rows of cells, and through the vertical edges of each of the hexagons (so that each hexagon is split in two, vertically). The corner intersections of the gridlines (i.e., right and topmost intersection, right and bottommost intersection, left and topmost intersection, left and bottommost intersection) are compared to the centers of the hexagons in which they reside. In some embodiments, if the corner intersections of the gridlines are in the centers of hexagons, then the marker is either correctly oriented (i.e., the expected top of the marker is at the top of the image) or inversed by 180 degrees (i.e., the expected bottom of the marker is at the top of the image). Otherwise, if the corner intersections of the gridlines are at edges of hexagons, the marker is rotated by + or - 90 degrees, and must be rotated by 90 degrees to be aligned (either properly aligned or inversed).

In some embodiments, the determination whether the marker is properly aligned or inversed is based on the marker creation rules, and evaluating whether the image of the marker meets those rules. For example, as explained hereinabove, in some embodiments it is ensured that the top corners of the marker must have the highest color values and the two bottom corners of the marker must have the lowest color values. As such, the instructions may include instructions to compare of the color values of the detected corners of the marker to each other, to determine whether the higher color values are identified at the upper or lower portion of the image, and that way to determine whether the image is in the right orientation, or must be inversed.

Instructions **248a** further include instructions to determine the physical size of the marker, for example in cm or in inches.

In some embodiments, the physical size of the marker may be stored in the database, together with other data encoded by the index cells of the marker. In such embodiments, the instructions to determine the physical size of the marker include instructions to extract, from the decoded content of the decimal identifier of the marker (found by execution of instructions **248c**) the physical dimensions of the marker.

In some other embodiments, the physical dimensions of the marker may be encoded in the colors of the corner cells of the marker. As explained hereinabove, the upper corner cells of the marker must have higher color values than the lower color cells of the marker. However, this leaves four different possible orientations for the corner cells of the marker, both in a three-color marker palette and in a four-color marker palette. For example, in a four-color palette, where the colors are indicated by the digits 0, 1, 2, and 3, with 0 indicating the highest, or darkest, color value, and 3 indicating the lowest, or lightest, color value, legal arrangements of the corner cells (starting from the top left corner, and moving through the corners in a clockwise direction) would be: (0, 1, 2, 3); (0, 1, 3, 2); (1, 0, 2, 3); or (1, 0, 3, 2).

Each of the possible orientations of the corner cell colors may be pre-associated with a specific, and predefined, physical size of the marker. For example, the combination (0, 1, 2, 3) may be associated with a square marker having a frame dimension of 200mm, and the combination (1, 0, 3, 2) may be associated with a square marker having a frame dimension of 25mm. Using this system, the colors of the corner cells, previously identified by instructions **242c,** may be extracted, and decoded based on the predefined rules to determine the physical dimensions of the marker.

In some embodiments, the colors of the corner cells, extracted during execution of instructions **248a,** are used to continue decoding the marker, as explained herein.

Instructions **248b** include instructions to test the fidelity of the marker detection, and to increase detection accuracy. The instructions to test fidelity include instructions to ensure that the colors of the pre-designated redundant cells match, or substantially match, the colors of the corner cells, established by execution of instructions **248a.**

Instructions **248c** are designed to decode the marker. They include instructions to extract the color of each cell of the marker. In some embodiments, the color of each cell of the marker may be extracted, or detected by clustering of the marker, in the color space (e.g., using RGB), to the colors identified for the corner cells. For example, k-means clustering may be used. In some embodiments, the detected colors may be further validated by a second iteration of clustering and/or by evaluating whether the distances between centers of clusters are substantially as expected.

Instructions **248c** further include instructions to use the extracted colors of each cell in the marker to form a number in base N, where N is the number of distinct colors in the marker palette (i.e., a string of digits having the values 0 to N-1). This number is a string of digits, where each digit represents the color value of a specific one of the index cells, in a predefined reading order. For example, in a marker having a four-color palette, the string of the digits would include the digits 0, 1, 2, 3, and would reflect the colors of the index cells, in sequence. An exemplary string of digits may be 000231112103.

In some embodiments, instructions **248c** include instructions to validate the identified string of digits, or the number in base N, using the checksum cells. In some embodiments, such validation includes summing the digits of the string of digits, modulus N, and comparing the resulting value to the digit, in base N, representing the color value of the checksum cell. If the results match, the string of digits is validated.

In the present example, the sum of the digits is 14, and N is 4, so the value of the checksum cells should be (14 mod 4) = 2, as shown in cells 20 and 21 of Figure 1A.

Instructions **248c** further include instructions to convert the number in base N to a decimal number, thereby to obtain the decimal code associated with the marker. For example, the exemplary string of digits 000231112103 would be decoded as the decimal number 185,747. In some embodiments, the conversion is carried out using the formula:

$$Marker\ Code = \sum (Index\ Cell\ Value \times Base^{Position})$$

where:

- index cell value is the color value associated with the cell, or the digit in the number in base $N$;
- base is the value of $N$; and
- position is the index of the index cell associated with that digit in the number in base $N$.

Once the decimal number is obtained, it can be used to access database **204** to extract information about the POI. As such, obtaining the decimal number completes decoding of the marker.

Storage medium **240** further has stored a physical estimation module **250,** which includes instructions to estimate the physical location of the user device relative to the marker. The instructions to estimate the physical location include instructions **250a** to estimate the distance of the user device from the marker, and instructions **250b** to estimate the angular orientation of the user device relative to the marker.

In some embodiments, instructions **250a** use the perceived dimensions of the marker, estimated by module **246,** and the physical dimensions of the marker, extracted by module **248,** to estimate the distance of the user from the marker. In some embodiments, the computation uses the long dimension, in pixels, of the ellipse used to enclose the marker in the captured image, as well as the focal length of the image capturing sensor **230.**

In some embodiments, instructions **250a** make use of the formula:

$$distance = \frac{(ellipse\ width) \times 2 \times (focal\ length)}{(ellipse\ long\ axis)}$$

In some embodiments, instructions **250b** use the translation of the center of the marker relative to the center of the image. In some such embodiments, instructions **250b** make use of the formula:

$$device\ angle = \mathrm{atan}\frac{(marker\ center - image\ center)}{focal\ length}$$

In some embodiments, the user device determines the angular orientation of the user relative to the marker's surface using the geometric distortion of the marker frame in the captured image.

When the user is directly in front of the marker (i.e., along the marker's surface normal), the square frame of the marker projects approximately as a circle in the image plane. However, when the user views the marker at an angle, the frame appears as an ellipse due to perspective distortion. The degree of compression along one axis of the ellipse corresponds to the cosine of the angular deviation ($\theta$) from the marker's normal, as given by:

$$\cos(\theta) \approx ab$$

where:

a is the length of the major axis of the ellipse;
b is the length of the minor axis of the ellipse; and
$\theta$ is the user's horizontal angular offset relative to the normal vector of the marker.

To determine the sign of $\theta$ (i.e., whether the user is to the left or right of the marker's normal), instructions **250b** may include instructions to fit two imaginary straight lines along the upper and lower edges of the marker frame in the captured image. An intersection point of these lines, if such exists and the lines are not parallel due to perspective distortion, is used to infer the direction of the user relative to the marker, and to compute the estimated angle of the user relative to the marker. For example, if the intersection point lies to the left of the center of the marker in the image, this indicates a positive $\theta$, meaning the user is located to the right of the marker's normal. Inversely, if the intersection lies to the right, $\theta$ is negative, and the user is to the left of the marker's normal.

This allows for quantification of the angle of view and for determining the user's side-relative position, which can be used to adjust navigation instructions accordingly (e.g., "turn slightly left" or "object is ahead to your right"). Storage medium **240** further has stored a reporting module **252,** which includes instructions to provide to the user, via output interface **234,** information associated with the decoded marker, as well as information relating to the location of the user device relative to the marker, as computed by module **250.** In some embodiments, the instructions include instructions to extract from database **204** the information associated with the marker, based on the decimal code obtained by module **248.** Typically, and particularly for blind and visually impaired users, the output would be, or would include, audio output.

Reference is now additionally made to Figure 4, which is a flow chart of a method for processing information encoded by, and relating to, markers of the disclosed technology (as illustrated in Figures 1A and 1B), using system **200** of Figure 3, according to embodiments of the disclosed technology. For example, the method may be carried out by a user device **203,** held by a user walking around an indoor facility such as a mall or a museum.

In some embodiments, user device 203 may be configured to decode captured marker images substantially in real time. As used herein, "substantially in real time" relates to a response latency short enough to support seamless interaction as perceived by the user during movement within a venue. For example, in some embodiments, the full processing time of the entire method of Figure 4 is completed in approximately 50 milliseconds, which is typically perceived by users as immediate or instant.

In some embodiments, user device **203** may be in constant communication with database **204,** for example via network **205.** In other embodiments, user device **203** may download a local copy of database **204,** such that processing of any markers encountered during the time the user walks in the indoor facility can be performed offline.

The disclosed method may be carried out by user device **203,** and specifically by processor **238** thereof, using instructions stored in storage medium **240,** and using other components of the device.

At step **S270,** which occurs while the user is walking around the indoor facility, device **203** captures images of the vicinity, for example using image capturing sensor **230.**

At step **S272,** processor **238** evaluates a captured image to assess whether they include a marker candidate, for example by execution of instructions **242a.**

If no marker candidate is included in the image, the flow returns to step **S270,** to await capturing of additional images. Otherwise, if a marker candidate is included in the image, at step **S274,** processor **238** evaluates whether the marker candidate is a valid one, for example by execution of instructions **242b** to filter invalid marker candidates.

If the marker candidate in the image is invalid, flow returns to step **S270** to await capturing of additional images. Otherwise, if the marker candidate is valid, at step **S276,** processor **238** identifies corner cells of the marker, for example by executing instructions **242c.**

At step **S278,** processor **238** corrects perspective distortions in the marker image, to obtain a square, planar, marker image, for example by executing instructions stored in marker projection module **244.** It is to be appreciated that step **S278** may include projecting the image of the marker from being distorted (for example, the marker may be disposed a non-planar surface, such as a round column, when the image is captured), to being fully planar.

In some embodiments, step **S278** includes breaking the image into segments, and processing each segment separately. In some embodiments, step **S278** includes matching the frame of the marker to a function, such as a parabola, to assist in normalizing of the marker.

At step **S280,** processor **238** determines the measurements, in pixels, of the marker, as perceived within the image, for example using instructions stored in perceived dimensions module **246.** In some embodiments, step **S280** involves enclosing the corners of the marker frame within an ellipse, and measuring the number of pixels in the long side of the ellipse and in the short side of the ellipse.

At step **S282,** processor **238** obtains the marker size, in length units such as cm or inches, for example by executing instructions **248a.**

At step **S283,** processor **238** determines the marker orientation, for example by executing instructions **248a** or other instructions stored in marker decoding module **248.** For example, determination of the marker orientation may be based on the corner cells identified at step **S276,** and their relationship to gridlines added to the image (virtually or electronically), as explained hereinabove with respect to the marker decoding module.

At step **S284,** the marker orientation is evaluated. If the marker orientation within the image is improper, the flow continues to optional step **S285** and the image of the marker is rotated as required based on the identified orientation.

At step **S286,** processor **238** estimates the location of the user device relative to the marker, for example by executing instructions **250a** and **250b** stored in physical estimation module **250.** In some embodiments, step **S286** includes estimating the distance of the user device from the marker. In some embodiments, step **S286** includes estimating an angle of the user device, relative to the marker.

In some embodiments, at optional step **S288,** processor **238** uses fidelity tests to ensure that the imaged marker is indeed a navigation aid marker that can be processed using the processor. For example, this may be accomplished by executing instructions **248b** stored in marker decoding module **248.**

In some embodiments, at step **S290,** processor **238** normalizes the colors of the cells in the imaged marker, for example based on the colors of the corner cells identified at step **S276.** In some embodiments, step **S290** is carried out by execution of instructions included in marker decoding module **248.**

At step **S292,** processor **238** decodes the imaged marker, to obtain a decimal code encoded by the marker, for example by executing instructions **248c** stored in marker decoding module **248.** In some embodiments, step **S292** includes the processor obtaining, from index cells of the marker, a base-$N$ marker-code, where $N$ is the number of colors in the color palette of the marker, using the checksum cells to ensure that the obtained base-$N$ marker-code is valid, and converting the base-$N$ marker-code into the decimal code.

At step **S294,** processor **238** uses the obtained decimal code to extract from database **204** information relating to the POI at which the marker is located, for example by executing instructions stored in reporting module **252.**

Finally at step **S296,** processor **238** causes output interface **234** to provide output to the user, the output including information relating to the POI as extracted from database **204** at step **S294,** as well as the distance of the user device from the marker and the angle of the user device relative to the marker, as estimated at step **S286.** In some embodiments, step **S296** is accomplished by the processor executing instructions stored in reporting module **252.** Typically, the output is provided to the user as an audio output. In some embodiments, the output may further include a tactile output and/or a visual output.

It is to be appreciated that the method of Figure 4 is carried out in real time, as the user walks through the indoor facility, and may be carried out repeatedly for each marker that comes into the field of view of image capturing sensor. As such, following completion of step **S296,** flow returns to step **S270** to determine whether additional markers are in the captured images.

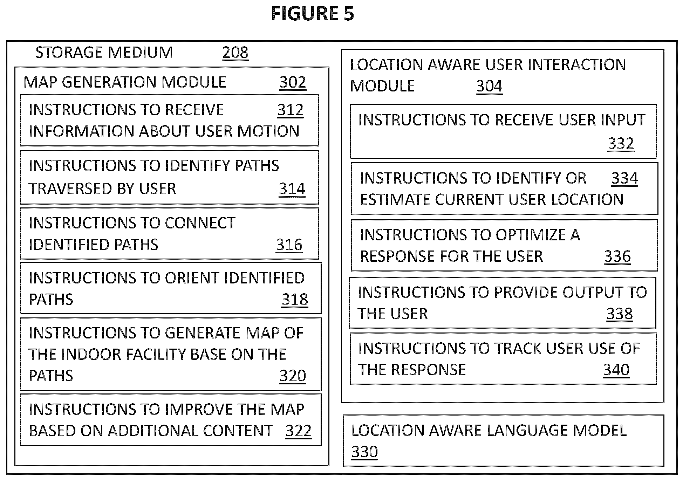

It is to be appreciated that while the user walks through the indoor facility, additional sensor(s) **237** in user device **203** may record additional information relating to the user's path. For example, an orientation sensor may record directions or orientations in which the user moved, a pressure sensor may record changes to pressure applied to the user device, and the like. Additionally, communication interface **236** of the user device may record information relating to the user's path, such as times at which the user entered and exited the range of certain beacons or transceivers. Furthermore, additional information may be extracted from images captured by image capturing sensor **230.** As explained in further detail hereinbelow with respect to Figure 5, all this information may be provided to server **207,** and used thereby to assist in mapping the indoor facility.

It is to be appreciated that use of markers **210** to assist the user in navigation, and processing of these markers, is independent of mapping of the indoor facility. As such, no pre-mapping of the indoor facility is required in order to use the markers to assist a user in getting around within the facility. Furthermore, use of the markers can occur in parallel to system **200** gradually generating a detailed map of the indoor facility, and of paths therein, as described hereinbelow with respect to Figures 5-6.

As discussed hereinabove, in some embodiments, the physical dimensions of the marker may be stored in database **204,** and accessible by decoding the marker. It is to be appreciated that in such embodiments, step **S282** of determining the physical dimensions of the marker is carried out after, or as part of, step **S294,** and step **S286,** which requires the physical dimensions of the marker, is carried out after steps **S294** and **S282.**

In other embodiments, in which the physical dimensions of the marker are encoded in the corner cells, step **S286** may be carried out at any time following extraction of the physical dimensions of the marker, whether before or after complete decoding of the marker.

Reference is now made to Figure 5, which is a schematic block diagram of storage medium **208** of server **206** forming part of system 200 of Figure 3, according to embodiments of the disclosed technology.

As discussed hereinabove with respect to Figure 3, server **206** may be in communication with client device(s) **202** and/or with user device(s) **203** via network(s) **205,** and is further functionally associated with database **204.** As such, some of the instructions stored in storage medium **208** are adapted to control communication with these components, which are external to the server.

Storage medium **208** may store a plurality of software modules, each of which may be associated with one or more instructions, to be executed by processor(s) **207** of server **206,** to achieve a specified result.

As seen in Figure 5, storage medium **208** has stored a map generation module **302** and a location aware user interaction module **304.**

As explained in further detail hereinbelow, map generation module **302** includes instructions that, when executed, use various inputs to automatically generate a map of paths within an indoor facility, which map can be used to assist users in navigation within the indoor facility.

It is to be appreciated that the map generation module **302** generates the map without necessarily requiring pre-mapping of the indoor facility, and makes use of the navigation aid markers, and their processing, as described hereinabove. Typically, map generation module **302** operates in the background, while users use markers **210** previously placed in the indoor facility to obtain information about POIs within the facility.

Map generation module **302** includes instructions **312** to receive, from a user device **203,** information about motion of a user within the indoor facility.

In some embodiments, instructions **312** may include instructions to obtain a sequence of markers **210** processed by user device **203** using the method of Figure 4, as well as the user's distance and angle relative to each such marker at the time of processing. Such a sequence of markers can provide anchor points indicating specific locations at which the user was located while walking around the indoor facility.

In some embodiments, instructions **312** may include instructions to obtain information from additional sensors **237** of the user device. For example, the server may obtain orientation information, e.g., from an accelerometer or gyroscope of user device **203.** As another example, the server may obtain network connection information, e.g., from network interface **236** of user device **203,** indicating when the user device was in range of specific beacons or network transmitters.

In some embodiments, instructions 312 may include instructions to obtain images captured by image capturing sensor 230 while the user walks around the indoor facility. Such images may reflect aspects of the user's motion within the indoor facility.

Typically, server 206 would be associated with multiple user devices 203, such that instructions 312 would be carried out with respect to motion of multiple users within the indoor facility, and possibly with respect to motion of the same user within the indoor facility multiple times.

Map generation module 302 includes instructions 314 to identify, based on the information received from user device 203, a path traversed by the user within the indoor facility.

In some embodiments, instructions 314 are adapted to identify paths between pairs of POIs associated with markers 210.

In some embodiments, instructions 314 use dead-reckoning methodologies to identify the paths used by the user.

In some embodiments, instructions 314 utilize the markers processed by the user to identify beginning and end points of a path, and the information collected from additional sensors to identify the path traversed between those beginning and end points.

In some embodiments, instructions 314 include instructions to identify an accessibility aspect of the path, such as whether the path includes stairs, escalators, elevators, ramps, narrow passageways, and the like. In some embodiments, the instructions may include instructions to analyze pictures captured by the user device to identify objects within the path, which objects are indicative of the accessibility aspect (e.g., the presence of stairs or escalators in the path).

In some embodiments, instructions 314 include instructions to identify the path in different layers, each layer based on a subset of the received information (e.g., marker layer, network layer, orientation sensor layer, etc.) and instructions to fuse the paths identified in each layer to more accurately identify the path, for example based on the Kalman filter method known in the art.

In some embodiments, instructions 314 include instructions to validate a specific path when the number of distinct uses of the path, by different users or at different times, exceeds a predetermined path-threshold. Exceeding of the path-threshold is indicative of a sufficiently high level of confidence in the path, for it to be considered a valid path for inclusion in the map being formed.

Map generation module 302 includes instructions 316 to connect paths traversed by users. In some embodiments, the instructions are instructions to connect validated paths. In some embodiments, connection of validated paths results in an extended path spanning, or passing through, multiple POIs associated with multiple markers.

Typically, the connected paths are oriented relative to each other, but need not necessarily be oriented relative to the world. For example, it is possible to say that a first path branches at a 60-degree angle to the right of a second path, but it is unclear whether the second path extends from north to south, from east to west, or along some other angular vector relative to the north.

Map generation module 302 includes instructions 318 to orient the connected paths, or each path, relative to the world - for example relative to the north.

In some embodiments, instructions 318 include instructions to orient the connected paths relative to an entrance and/or an exit of the indoor facility, whose position in the world is known, for example based on GPS or another positioning system. In some embodiments, instructions 318 include instructions to orient the connected paths relative to multiple entrances and/or exits (e.g., at least two), which may provide for more accurate orienting of the paths in the world.

In some embodiments, instructions 318 to orient the connected paths include instructions to use external resources, such as publicly available imaging information and/or maps (e.g., available over the Internet), to orient the indoor facility, and the connected paths, relative to the world. For example, if it can be deduced from a map of a rectangular building that the long edge of the building extends along a north-south vector, and that the entrance to the building is on the shorter east side of the building, then it is possible to orient any path within the building based on orienting at least one path starting at the entrance.

Map generation module 302 includes instructions 320, to be executed a sufficiently large number of paths are connected and oriented (i.e., the amount of data received has exceeded a critical mass), to form a computerized map of paths traversing between any two POIs, or markers, of the indoor facility. In some embodiments, within the generated map, each path, or each path segments, is associated with accessibility information.

In some embodiments, map generation module 302 includes instructions 322 to periodically, intermittently, or regularly update or improve the map based on additional layers of information, which may impact the map.

In some embodiments, instructions 322 include instructions to update or improve the map based on information provided by the client (e.g., the owner or operator of the indoor facility or of a portion thereof). For example, instructions 322 may include instructions to receive a map of the indoor facility (e.g., a map of a museum provided to visitors, a mapping of vendors in a mall to specific store locations, a floor plan of a university building, or a blueprint of a building), and to integrate information from the received map into the generated map.

In some embodiments, instructions **322** include instructions to update or improve the map based on publicly available information. For example, instructions **322** may include instructions to extract from the Internet information relating to the mapped indoor facility, and associate the information with the map (e.g., for each store in the mall, extract a link to the store's website and associate it with that store in the map; for each exhibit in a museum extract from the museum website a list of the key pieces displayed in the exhibit and associate them with the exhibit in the map).

In some embodiments, instructions **322** include instructions to update or improve the map based on verbal or text information received from the client in response to prompts provided from server **206** to the client device. For example, instructions **322** may include instructions to cause client device **202** to prompt the client, using output interface **214** of the client device, to provide information relating to products sold in his store, specific arrangement of aisles in the store, promotions, POIs within the store, and the like. Instructions **322** further include instructions to receive from client device **202,** (e.g., via network interfaces **216** and **209**) information provided by the client in response to the prompts. Instructions **322** further include instructions to integrate the information received from the client in response to the prompts into the map.

In some embodiments, the prompts provided to the client may relate to a specific POI. In some embodiments, the prompts provided to the client may relate to multiple POIs within the indoor facility. In some embodiments, the prompts may ask the client to move around the indoor facility so as to collect information using sensors forming part of the client device, during the client's motion, and use that information in updating or improving the map. In some such embodiments, the prompts may guide the client to provide information about large portions of, or the entire, indoor facility, by collecting information about each portion in sequence.

In some embodiments, the prompts to the client may be textual prompts, provided via a visual and/or an audio output interface. In some embodiments, the information received from the client may be textual information, received via a visual and/or an audio input interface.

In some embodiments, the prompts and the responses received from the client may be in natural language. For example, the prompt may be "stand next to the marker, and describe what you see around you". The response to this prompt may be "I am standing with my back to the marker. Directly in front of me there is an ice cream stand. At a 45 degree angle to my right there is another passageway, and beyond it there is a jewelry store. At a 90 degree angle to my right is a passageway to the lotus gate of the mall. At a 90 degree angle to my left is the food court".

In some embodiments, the prompting and responses may be iterative, so that the prompts may ask the client to provide additional information to augment information already provided. For example, a subsequent prompt may be "how many steps would it take you to reach the counter of the ice cream stand? How many steps would it take you to reach the lotus gate?". The response may be a number of steps, or another distance indicator, that would assist in mapping of the mall.

It is to be appreciated that in some embodiments, the prompts and their responses may be processed using a machine-learning based language model **330,** which may be stored within storage medium **208.** Language model **330** may be pre-trained to function as a location aware language model and may be based on existing language models using natural language processing.

It is to be appreciated that, in some embodiments, client prompting as described herein with respect to instructions **322** may be used to completely map the indoor facility, in addition to use of the markers and other sensors. In some embodiments, the map based on client prompting may form another mapping layer, to be fused with other mapping layers using Kalman filter methods.

Location aware user interaction module **304** includes instructions that, when executed, receive input from a user, as well as a prompt provided by the user, and use the map of the indoor facility and additional information about the indoor facility to provide a prompt response to the user.

As explained hereinbelow, in some embodiments, the user prompt may be a generic question, that may be answered regardless of the user location. For example, the question may be "does The Mills at Jersey Gardens, NJ, have a bowling alley?". The response to this question may be provided based on publicly available information, such as an Internet search. In other embodiments, the user prompt may require location awareness. For example, the user's question may be "how do I get to the pharmacy in this mall?". In this case, the system may identify the user's location, and provide instructions directing the user to the pharmacy.

Thus, it is to be appreciated that location aware user interaction module **304** makes use of the map generated and maintained by map generation module **302,** and of language model **330,** when responding to user prompts.

Location aware user interaction module **304** includes instructions **332** to receive, from a user device **203,** user input, which typically includes a user prompt. In some embodiments, the user prompt may be provided by the user, in a dedicated user interface provided by output interface **234** of the user device, via input interface **232** of the user device. Typically, the user prompt includes a question or a request, often relating to a specific indoor facility. In some embodiments, the user input may include a list of POIs that the user wishes to reach. For example, the user may provide, as the input, their grocery list, and ask "please generate the best route for collecting all these groceries". As another example, the user prompt may be "I need to go to the pharmacy, the bank, and a shoe store to buy sneakers for my toddler. Please give me an efficient route through the mall. I have a stroller with me, so make the route accessible".

In some embodiments, the user prompt may relate to a location at which the user is not present. For example, the user prompt may say "I am going to The Mills at Jersey Gardens later today. I want to visit the bookstore and the rollercoaster there. Can you plan the best route for me?".

Location aware user interaction module **304** includes instructions **334** to identify, or estimate, the current location of user device **203** from which the user prompt was received. For example, the identification of the location of the user device may be based on one or more markers recently decoded by the user device, images captured by image capturing sensor **230** of the user device, or information received from other sensors **237** of the user device (e.g., a GPS signal, a network signal, an orientation sensor signal, and the like).

Location aware user interaction module **304** includes instructions **336** to generate an optimal response to the user's prompt.

In some embodiments, such as when the user query or prompt was generic, instructions **336** may include instructions to conduct an Internet search, or a search through other publicly available database, to obtain or generate the response to the user.

In some embodiments, such as when the user query relates to their current location, to things available in their vicinity, or to routes within an indoor facility, instructions **336** may use the map generated and maintained by map generation module **302** to obtain the optimal response.

In some embodiments, instructions **336** include instructions to take accessibility aspects into consideration when generating the optimal response. For example, if the user is walking around with a baby in a stroller, instructions **336** may optimize, or strike a balance, between providing the user with the shortest route and the most accessible route between two requested locations.

In some embodiments, instructions **336** may include instructions to prompt the user for additional information, and to wait for the user's response prior to obtaining the optimal response. For example, if the user prompt asked for directions, the system may prompt the user by asking "are there any accessibility considerations that we need to take into account?". The user may then response "I am claustrophobic so please don't include any elevators in the route. I don't mind walking up the stairs, it is good exercise!".

Location aware user interaction module **304** further includes instructions **338** to provide to the user, via output interface **234,** the optimized response computed by execution of instructions **336.**

In some embodiments, instructions **338** include instructions to provide the response to the user at once. For example, an entire route (or an overview of the route) may be provided to the user at once.

In some embodiments, instructions **338** include instructions to provide the response to the user in a step-by-step manner. For example, if the user prompt required a route between four different POIs, instructions **338** may include instructions to first provide a route between the current location and the first POI, subsequently provide a route between the first POI and the second POI, and so on.

In some embodiments, location aware user interaction module **304** further includes instructions **340** to track how the user is using the response provided to them, and correct the user if necessary. For example, if instructions **338** provided the user with an optimized route from their current location to the pharmacy, instructions **340** may track the user's motion along the provided route, and update or correct the instructions, as necessary. For example, instructions **340** may include instructions to repeatedly identify the user's location, to determine whether the user is on the optimized route, and if the user is not on the optimized route, to offer them corrective information to help them get back to the optimized route, or to use instructions **338** to obtain a new optimized route based on the user's updated location.

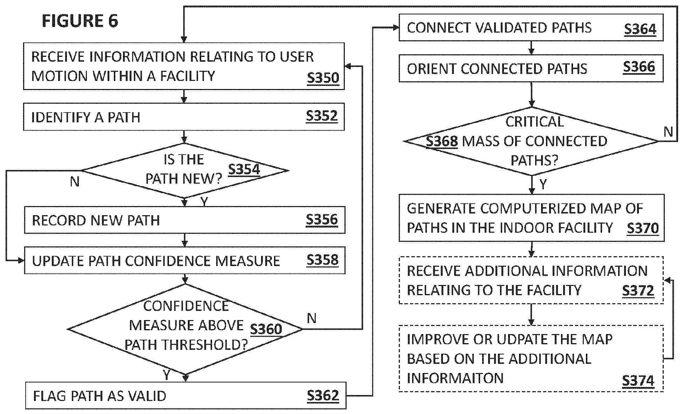

Reference is now made to Figure 6, which is a flow chart of a method of mapping an indoor facility using marker-based information relating to paths traversed by users within the indoor facility and using system **200** and server **206,** according to embodiments of the disclosed technology.

Some embodiments of the method of Figure 6 are suitable for automatically generating and maintaining accurate indoor venue maps based on collective data obtained from users' navigation events and interactions with markers. Data is gathered from various sensors, such as image sensors, inertial measurement units, magnetic sensors, and proximity sensors, to identify frequently traversed paths and assemble a reliable path layout, and to dynamically update that path layout. The generated path layouts are oriented relative to a stable geographic reference point, allowing for consistent and intuitive navigation.

At a step **S350,** processor **207** receives, from multiple user devices **203,** information relating to motion of a user associated with each such user device within an indoor facility being mapped. For example, step **S350** may be accomplished by executing instructions **312** in storage medium **208.**

In some embodiments, the received information may include a sequence of markers **210** processed by user device **203** using the method of Figure 4, as well as the user's distance and angle relative to each such marker at the time of processing.

In some embodiments, the received information may include information from additional sensors **237** of the user device, such as orientation information, e.g., from an accelerometer or gyroscope of user device **203** and/or network connection information, e.g., from network interface **236** of user device **203.**

In some embodiments, the received information includes images captured by image capturing sensor **230** while the user walks around the indoor facility, or information extracted from such images.

For each such collection of information received from the user, at step **S352,** processor **207** identifies one or more paths traversed by the user within the indoor facility. In some embodiments, this may be accomplished by using dead-reckoning methodologies.

In some embodiments, the identified paths are between pairs of POIs associated with markers **210.** In some embodiments, identification of the paths utilizes the markers processed by the user to identify beginning and end points of a path, and the information collected from additional sensors to identify the path traversed between those beginning and end points.

In some embodiments, identification of a path includes identifying an accessibility aspect of the path, such as whether the path includes stairs, escalators, elevators, ramps, narrow passageways, and the like.

In some embodiments, accessibility considerations are embedded into the venue mapping process. Accessibility metadata for each path segment may be automatically enriched and regularly updated based on sensor data analysis, including image recognition techniques applied to captured environmental images. The system identifies accessibility-critical features such as stairs, ramps, narrow passages, or obstacles, and incorporates these details into the navigation map to provide real-time accessibility-aware route recommendations.

In some embodiments, identification of the path occurs in different layers, each layer based on a subset of the received information (e.g., marker layer, network layer, orientation sensor layer, etc.). In some such embodiments, the resulting paths in different layers may be fuses to more accurately identify the path, for example based on the Kalman filter method known in the art.

At step **S354,** processor **207** evaluates whether the identified path is a new path. If the path is a new path, its existence is recorded and stored, for example in database **204,** at step **S356.**

Subsequently, as well as if the path is not a new path and a substantially similar path has previously been recorded, at step **S358,** processor **207** updates a confidence measure of the path to reflect its identification. For example, the confidence measure may count the number of distinct users who have used substantially the same path.

At step **S360,** processor **207** evaluates whether the confidence measure of the path exceeds a path-threshold. If the confidence measure is below the threshold, flow returns to step **S350** and the processor awaits additional identifications of the same path, which indicates the validity of the path. Otherwise, if the confidence measure exceeds the threshold, at step **S362** processor **207** flags the path as a valid path. In some embodiments, the flagging of the path includes recording, or storing, an accessibility aspect of the path (e.g., if the path includes stairs, escalators, elevators).

In some embodiments, steps **S352** to **S362** may each be accomplished by executing instructions **314** in storage medium **208.**

At step **S364,** processor **207** connects validated paths, to form an extended path, or a path layout, spanning, or passing through, multiple POIs associated with multiple markers. For example, this may be accomplished by executing instructions **316** in storage medium **208.**

In some embodiments, following completion of step **S364,** the connected paths are oriented relative to each other, but need not necessarily be oriented relative to the world.

At step **S366,** processor **207** orients the connected paths, or the path layout, relative to the world - for example relative to the north. For example, this may be accomplished by executing instructions **318** in storage medium **208.**

In some embodiments, orienting of the connected paths is relative to one or more entrances and/or exits of the indoor facility, whose position in the world is known.

In some embodiments, orienting of the connected paths is accomplished using external resources, such as publicly available imaging information and/or maps (e.g., available over the Internet), to orient the indoor facility, and the connected paths, relative to the world.

At step **S368,** processor **207** evaluates whether a critical mass of connected paths has been reached. Stated differently, the processor evaluates whether a sufficiently large number of paths are connected and oriented.

If the critical mass has not yet been reached, flow returns to step **S350** and the processor awaits identification and validation of additional paths.

Otherwise, at step **S370,** processor **207** generates a computerized map of paths traversing between any two POIs, or markers, of the indoor facility. In some embodiments, within the generated map, each path, or each path segments, is associated with accessibility information. For example, this may be accomplished by executing instructions **320** in storage medium **208.**

In some embodiments, following generation of the computerized map, at step **S372** processor **207** receives additional information for updating or improving the map, and at step **S374** processor **207** updates or improves the map based on the received information. For example, this may be accomplished by executing instructions **322** in storage medium **208.**

In some embodiments, steps **S372** and **S374** may be carried out periodically, intermittently, a limited number of times, or not at all. As such, following completion of step **S374,** flow returns to step **S372** to await additional information for improving or updating the map.

In some embodiments, the additional information is provided by the client. For example, the additional information may include a map, floor plan, brochure, or blueprint, including information not previously reflected in the generated map. As another example, the additional information may include information about a change that occurred in the indoor facility, such as a store closing and another store opening in its stead, or a change in the exhibits displayed by a museum.

In some embodiments, the additional information is publicly available information, such as information extracted from the Internet, or using GPS systems. For example, the information may include a list of stores in a mall or of unique items in museum exhibits).

In some embodiments, the additional information is textually (orally or in writing) provided by the client, in response to prompts requesting the additional information. In some such embodiments, step **S372** may include presenting the prompts to the client.

For example, the prompt may ask the client provide information relating to products sold in his store, a specific arrangement of aisles in the store, promotions, or other POIs within the store, and the like.

In some embodiments, the prompts provided to the client may relate to a specific POI. In some embodiments, the prompts provided to the client may relate to multiple POIs within the indoor facility. In some embodiments, the prompts may ask the client to move around the indoor facility while information is collected from the client device using additional sensors **217,** during the client's motion. In some such embodiments, the prompts may guide the client to provide information about large portions of, or the entire, indoor facility, by collecting information about each portion in sequence.

In some embodiments, the prompts and the responses received from the client may be in natural language, and may be converted to spatial information for integration into the map.

In some embodiments, the prompting and responses may be iterative, so that the prompts may ask the client to provide additional information to augment information already provided.

In some embodiments, the prompting of clients to provide updates to the venue map may be periodic, for example to ensure the ongoing accuracy of the venue maps. Such updates may be supplied through textual inputs or through active movement within the venue accompanied by sensor data collection, as described herein. The collected information may be integrated into the map, as described herein, to ensure that maps reflect the current state of the venue, including temporary or permanent layout changes.

It is to be appreciated that in some embodiments, even following generation of the computerized map at step **S370,** steps **S350-S368** of Figure 6 continue to be iteratively implemented, to reinforce paths within the map.

In some embodiments, if a path is not sufficiently reinforced, its confidence measure may drop, leading to the path possibly being removed from the map. For example, this may occur when a path is blocked for a while, for example due to construction in the indoor facility.

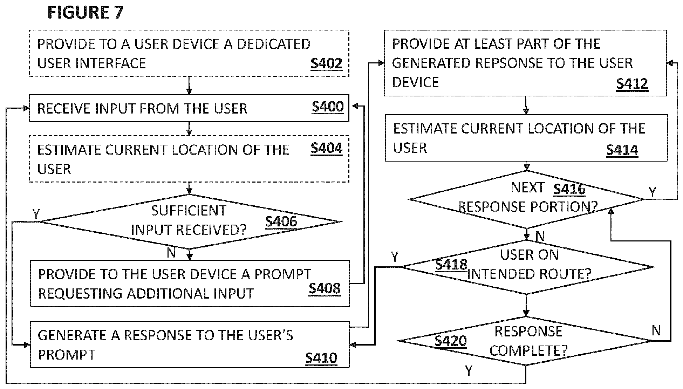

Reference is now made to Figure 7, which is a flow chart of a method of providing a user with navigation aid information using user device **203** and server **206,** according to embodiments of the disclosed technology.

Using the method of Figure 7, a user (or client) can "converse" with server **206,** to obtain responses to questions relating to locations, venues, and the like. Typically, the method of Figure 7 makes use of the location aware language model **330,** as well as of the map generated and/or maintained by the method of Figure 6, to provide information to the user.

In some embodiments, the method of Figure 7 makes use of a context-aware machine-learning module that interacts with users through natural language processing (NLP). Users can engage in intuitive dialogue with the system to request navigation guidance, inquire about specific points of interest, or express particular accessibility requirements. This module utilizes real-time location and sensor data alongside historical user interactions to provide personalized and adaptive navigation assistance, ensuring each user receives guidance tailored to their immediate context and needs.

In some embodiments, additional, publicly available, information, may augment the body of knowledge of the location aware language model, to enable the servers ability to respond to more generic questions that are not necessarily dependent on the map.

At step **S400,** processor **207** receives an input from the user, which input typically includes a user prompt, for example by executing instructions **332** of location aware user interaction module **304.** Typically, the user prompt is provided by the user to the server via input interface **232** of the user device, and by communication between the user device and the server via their respective network interfaces.

Typically, the user prompt includes a question or a request, often relating to a specific indoor facility.

In some embodiments, the user prompt may be a generic question, that may be answered regardless of the user location. For example, the question may be "does The Mills at Jersey Gardens, NJ, have a bowling alley?". In the context of the present application, a generic question is a question a response to which may be provided based on publicly available information, such as an Internet search, without use of the markers or map of the disclosed technology.

In some embodiments, the user prompt may require location awareness. For example, the user's question may be "how do I get to the pharmacy in this mall?". In this case, in order to answer the user's question, the user's location must first be identified, or estimated, so that proper directions can be provided to the user.

In some embodiments, the user prompt may relate to a location at which the user is not present. For example, the user prompt may say "I am going to The Mills at Jersey Gardens later today. I want to visit the bookstore and the rollercoaster there. Can you plan the best route for me?".

In some embodiments, the user input may include a list of POIs that the user wishes to reach. For example, the user may provide, as the input, their grocery list, and ask "please generate the best route for collecting all these groceries". As another example, the user prompt may be "I need to go to the pharmacy, the bank, and a shoe store to buy sneakers for my toddler. Please give me an efficient route through the mall. I have a stroller with me, so make the route accessible".

In some embodiments, the user input may include additional input from the user device, such as readings of additional sensors **237** of the user device, images captured by image capturing sensor **230,** information regarding markers processed and decoded by the user device using the method of Figure 4, and the like.

In some embodiments, in an optional step **S402** preceding step **S400,** processor **207** may provide to a user device **203** operated by the user a dedicated user interface, to be provided to the user by output interface **234** of the user device. The dedicated user interface may include an interaction item (e.g., text box, audio recording button) enabling the user to provide their user input or prompt.

In some embodiments, such as when the prompt received from the user is location dependent (e.g., the user is in an indoor facility and wants instructions for getting to a specific location within that facility), at step **S404** processor **207** identifies or estimates the current location of user device **203** from which the user prompt was received.

In some embodiments, such as when the question asked by the user is generic, or when the user is providing a prompt to prepare for a later visit to an indoor facility but is not actually there, step **S404** may be omitted.

In other embodiments, step **S404** may be implemented regardless of whether it is needed for providing a response to the user, for example for internal use-monitoring purposes.

In some embodiments, the location of the user device may be identified based on one or more markers recently decoded by the user device.

In some embodiments, the location of the user device may be identified based on images captured by image capturing sensor **230** of the user device.

In some embodiments, the location of the user device may be identified based on information received from other sensors **237** of the user device (e.g., a GPS signal, a network signal, an orientation sensor signal, and the like).

At step **S406,** processor **207** evaluates whether it has received sufficient input from the user to provide a suitable, or optimal, response to the user. For example, if the user asked for a route, the processor may evaluate whether it knows the accessibility preferences of the user when navigating through an indoor facility.

If the processor has not received sufficient input from the user to provide a suitable response, at step **S408** processor **207** may provide to a user device **203,** and via the dedicated user interface, a prompt or question to be answered by the user in order to gather the information required to provide the user with a suitable response. In the present example, the prompt may be "do you want the route to have any specific accessibility features? Can the route include stairs, escalators, or elevators?". The flow may then return to step **S400** to await additional user input to augment the prompt provided by the user.

Otherwise, if the processor has received sufficient input, at step **S410** processor generates a response to the user's prompt, which is optimized to the user's preferences, for example by executing instructions 336 of the location aware user interaction module **304.**

In some embodiments, such as when the user query or prompt was generic, generating the response may include conducting an Internet search, or a search through other publicly available database.

In some embodiments, such as when the user query relates to their current location, to things available in their vicinity, or to routes within an indoor facility, generating the response may include drawing information from a map of the indoor facility, such as the map generated and maintained using the method of Figure 6 described hereinabove.

In some embodiments, when the user prompt requests a route through an indoor facility, generating the response includes balancing the user's accessibility preferences with the desire to provide the user with the shortest route. For example, if the user is walking around with a baby in a stroller, the generated route may be the shortest route that is accessible to a stroller, which may be longer than the shortest inaccessible route. As another example, if the user is claustrophobic, the generated route would be the best route that does not require the user to enter elevators or narrow passageways.

At step **S412,** processor **207** provides the generated response to user device **203,** for outputting to the user via output interface **234,** for example by executing instructions **338.**

In some embodiments, the response may be provided to the user at once, in a single response. For example, an entire route (or an overview of the route) may be provided to the user at once.

In some embodiments, the response may be provided to the user in a step-by-step manner. For example, if the user prompt required a route between four different POIs, the response may include a route between the current location and the first POI. Subsequently, for example when the user has reached the first POI, processor 207 may provide to the user the next portion of the response, such as route between the first POI and the second POI.

In some embodiments, in which the response includes instructions for navigating within the indoor facility, or that the next portion of the response should be provided when the user reaches a specific POI, the processor is adapted to track the motion of the user and provide route corrections and/or additional response information if/when necessary.

In some such embodiments, at step **S414,** processor **207** once again estimates the location of the user, substantially as described hereinabove with respect to step **S404.**

At step **S416,** processor **207** evaluates whether the user is at a suitable location for providing the next portion of the response. If the answer is yes, the flow returns to step **S412** for providing the next portion of the response to the user.

Otherwise, if the user is not at the suitable location for receiving the next portion of the response, at step **S418** processor **207** evaluates whether the user is proceeding along the intended route.

If the user has deviated from the intended route, flow returns to step **S410,** where the response to the user's request is recomputed based on the user's current location (which has deviated from the route).

Otherwise, at step **S420,** processor **207** evaluates whether the entire response has been provided to the user, or whether the user's prompt has been fully responded to.

If there are portions of the response that have not been provided to the user, flow return to step **S416** to determine whether the user has reached the point at which they should be provided with the next portion of the response.

Otherwise, if this interaction with the user is complete, flow returns to step **S400** to await another user prompt.

In the context of the present application, the terms "point of interest" and "POI" are used interchangeably and relate to any location, or object, that can be of interest to a human user.

In the context of the present application, the term "in real time" with respect to an action relates to the action occurring within a time that a human does not feel is delayed, which is sufficiently short to support live interaction during user movement. In this context, the term "in real time" is typically within 100 milliseconds, 75 milliseconds, or 50 milliseconds of initiation of the action.

Exemplary embodiments of the disclosed technology are provided hereinbelow:

1. A marker for indoor navigation, the marker being printed on a printing substrate and associated with information stored in a database, the key to the information stored in the database being a decimal code, the marker including:

a plurality of non-quadrilinear tessellating cells, each of the cells being in a color selected from a color palette of the marker, the color palette having N colors, where N is at least three;
a square background surrounding the cells; and
a square frame surrounding the background, the square frame being in a color that highly contrasts with the square background,
wherein the plurality of cells is divided into a corner cells subset, a first subset, a second subset, and a third subset, each of the subsets being mutually exclusive from all the other subsets, and wherein:

the corner cells subset includes cells at the corners of the marker, such that at least one corner cell is colored in each of the colors of the color palette,
the first subset includes cells encoding a numerical identifier in base N, which can be decoded for accessing the information associated with the marker and stored in the database;
the second subset includes checksum cells each forming a checksum of the numerical identifier in base N; and
the third subset includes redundant cells, each of the redundant cells matching, in its color, one of the corner cells.

2. The marker of exemplary embodiment 1, wherein the color palette includes black, white, and a third hue which is not monochromatic with black and white.

3. The marker of exemplary embodiment 1, wherein the color palette is polychromatic, and includes at least two different hues, other than black and/or white.

4. The marker of any one of exemplary embodiments 1 to 3, wherein the sequence of colors of the corner cells, when following a pre-designated order, encodes a physical length of the marker.

5. The marker of any one of exemplary embodiments 1 to 3, wherein the physical length of the marker is stored in the database and can be accessed using the numerical identifier in base N.

6. The marker of any one of exemplary embodiments 1 to 5, wherein the colors of the corner cells function as a reference normalization of colors of other cells in the marker.

7. The marker of any one of exemplary embodiments 1 to 6, wherein the non-quadrilinear tessellating cells include hexagonal cells, arranged in rows.

8. The marker of any one of exemplary embodiments 1 to 7, wherein the marker has a specific physical length, selected from a pre-defined group of possible physical lengths, and wherein the specific physical length of the marker corresponds to a distance at which the marker is to be decoded.

9. The marker of any one of exemplary embodiments 1 to 8, wherein the cells have a specific and predefined arrangement within the background, the arrangement being suitable for determining the marker orientation, when decoding the marker.

10. The marker of any one of exemplary embodiments 1 to 9, wherein the numerical identifier in base N is adapted to be converted into the decimal code for accessing the database.

11. The marker of any one of exemplary embodiments 1 to 10, wherein the colors in the color palette are distinguishable by visually impaired or colorblind people.

12. A user-operated device for obtaining information about a point of interest near a user, the information being associated with a marker disposed at the point of interest and stored in a database, the marker being a marker according to any one of exemplary embodiments 1 to 11, the device including:

an image capturing sensor adapted to capture an image of the marker;
an output interface adapted to provide output to the user, the output including at least some of the information;
a processor, functionally associated with the image capturing sensor, the output interface, and the database; and
a non-transitory storage medium storing instructions to be executed by the processor, the non-transitory storage medium having stored:

(a) instructions to receive an image captured by the image capturing sensor, the image being of the vicinity of the device;
(b) instructions to identify the presence of a marker within the image;
(c) instructions to correct the marker projection in the captured image;
(d) instruction to obtain perceived dimensions of the marker, within the captured image;
(e) instructions to obtain physical dimensions of the marker;
(f) instruction to estimate a distance of the device to the marker, and an angle of the device relative to the marker, based on the perceived dimensions of the marker and the physical dimensions of the marker;
(g) instructions to decode the marker to obtain the numerical identifier in base N;
(h) instructions to convert the numerical identifier in base N to the decimal code;
(i) instructions to use the decimal code to extract the information associated with the marker from the database; and
(j) instructions to provide to the user, via the output interface, the information associated with the marker, as well as an estimate of the user's distance to the marker and angle relative to the marker.

13. The device of exemplary embodiment 12, wherein the instructions to obtain perceived dimensions of the marker include:

instructions to identify the corner cells of the marker;
instructions to fit the corner cells of the marker into an ellipse; and
instructions to compute the size of the long axis of the ellipse and the short axis of the ellipse, in pixels, to obtain perceived dimensions of the marker.

14. The device of exemplary embodiment 12 or exemplary embodiment 13, wherein the instructions to obtain physical dimensions of the marker include:

instructions to identify corner cells of the marker;
instructions to obtain color values of the corner cells;
instructions to form a sequence of the color values of the corner cells, the sequence following a pre-defined order of the corner cells; and
instructions to obtain physical dimensions of the marker that are mapped to the sequence.

15. The device of exemplary embodiment 12 or exemplary embodiment 13, wherein the physical dimensions of the marker are stored in the database, and the instructions to extract the physical dimensions include instructions to obtain the physical dimensions from the information associated with the marker in the database, following extraction of the information.

16. The device of any one of exemplary embodiments 12 to 15, wherein the instructions to identify a marker include instructions to identify a valid marker, and wherein the storage medium further has stored instructions to validate the marker.

17. The device of exemplary embodiment 16, wherein the instructions to validate the marker include instructions to sample pixels in the image, and to determine that a marker candidate appearing in the image has a frame pixel value in a first predetermined range and a background pixel value within a second predetermined range.

18. The device of any one of exemplary embodiments 16 to 17, wherein the instructions to validate the marker include instructions to identify corner cells of the marker, to obtain color values of the corner cells, and to ensure that the color values of the corner cells meet at least one predefined rule.

19. The device of any one of exemplary embodiments 16 to 18, wherein the instructions to validate the marker include instructions to identify checksum cells of the marker and to ensure that the color value of the checksum cells equals a checksum value computed using the numerical identifier in base N.

20. The device of any one of exemplary embodiments 16 to 19, wherein the instructions to validate the marker include instructions to identify the corner cells and redundant cells of the marker, and to ensure that the color value of each of the redundant cells is equal to the color value of a corresponding one of the corner cells.

21. The device of any one of exemplary embodiments 12 to 20, wherein the storage medium further has stored instructions to:

determine a rotational orientation of the marker; and
when the rotational orientation of the marker is different from an expected orientation thereof, rotate the image or the marker in the image prior to decoding the marker.

22. The device of any one of exemplary embodiments 12 to 21, wherein the instructions to correct the marker projection in the captured image include instructions to correct the marker projection when the marker is disposed on a non-planar surface.

23. The device of exemplary embodiment 22, wherein the instructions to correct the marker projection include:

instructions to identify at least eight reference points for marker projections, the at least eight reference points including corners of the frame of the marker and centers of the edges of the frame of the marker;
instructions to draw virtual lines between the at least eight reference points to virtually divide the marker into at least four segments; and
instructions to correct projection of each of the at least four segments to form corrected image segments, and to connect the corrected image segments to form a complete corrected marker image.

24. A method of obtaining information about a point of interest near a user, the information being associated with a marker disposed at the point of interest and stored in a database, the marker being a marker according to any one of exemplary embodiments 1 to 11, the method including:

(a) receiving an image of the vicinity of the user;
(b) identifying the presence of a marker within the image;
(c) correcting the marker projection in the captured image;
(d) obtaining perceived dimensions of the marker, within the captured image;
(e) obtaining physical dimensions of the marker;
(f) estimating a distance of the device to the marker, and an angle of the device relative to the marker, based on the perceived dimensions of the marker and the physical dimensions of the marker;
(g) decoding the marker to obtain the numerical identifier in base N;
(h) converting the numerical identifier in base N to the decimal code;
(i) using the decimal code to extract the information associated with the marker from the database; and
(j) providing to the user, via an output interface of a user device, the information associated with the marker, as well as an estimate of the user's distance to the marker and angle relative to the marker.

25. The method of exemplary embodiment 24, wherein obtaining the perceived dimensions of the marker includes:

identifying the corner cells of the marker;
fitting the corner cells of the marker into an ellipse; and
computing the size of the long axis of the ellipse and the short axis of the ellipse, in pixels, to obtain perceived dimensions of the marker.

26. The method of exemplary embodiment 24 or exemplary embodiment 25, wherein obtaining physical dimensions of the marker includes:

identifying corner cells of the marker;

obtaining color values of the corner cells;

forming a sequence of the color values of the corner cells, the sequence following a pre-defined order of the corner cells; and

obtaining physical dimensions of the marker that are mapped to the sequence.

27. The method of exemplary embodiment 24 or exemplary embodiment 25, wherein the physical dimensions of the marker are stored in the database, and obtaining the physical dimensions includes obtaining the physical dimensions from the information associated with the marker in the database, following step (i).

28. The method of any one of exemplary embodiments 24 to 27, wherein identifying the marker includes validating the marker.

29. The method of exemplary embodiment 28, wherein validating the marker includes sampling pixels in the image, and determining that the marker candidate appearing in the image has a frame pixel value in a first predetermined range and a background pixel value within a second predetermined range.

30. The method of any one of exemplary embodiments 28 to 29, wherein validating the marker includes identifying corner cells of the marker, obtaining color values of the corner cells, and ensuring that the color values of the corner cells meet at least one predefined rule.

31. The method of any one of exemplary embodiments 28 to 30, wherein validating the marker includes identifying checksum cells of the marker and ensuring that the color value of the checksum cells equals a checksum value computed using the numerical identifier in base N.

32. The method of any one of exemplary embodiments 28 to 30, wherein validating the marker includes identifying the corner cells and redundant cells of the marker, and ensuring that the color value of each of the redundant cells is equal to the color value of a corresponding one of the corner cells.

33. The method of any one of exemplary embodiments 24 to 32, further including:

determining a rotational orientation of the marker; and

when the rotational orientation of the marker is different from an expected orientation thereof, rotating the image or the marker in the image prior to decoding the marker.

34. The method of any one of exemplary embodiments 24 to 33, wherein correcting the marker projection in the captured image include correcting the marker projection when the marker is disposed on a non-planar surface.

35. The method of exemplary embodiment 34, wherein correcting the marker projection includes:

identifying at least eight reference points for marker projections, the at least eight reference points including corners of the frame of the marker and centers of the edges of the frame of the marker;

drawing virtual lines extending between the at least eight reference points, thereby virtually dividing the marker into at least four segments; and

correcting projection of each of the at least four segments to form corrected image segments, and connecting the corrected image segments to form a complete corrected marker image.

36. The method of any one of exemplary embodiments 24 to 35, wherein the output is provided to the user, and can assist in user navigation between markers, without a pre-existing map of a path between markers.

37. The method of any one of exemplary embodiments 24 to 36, further including providing the output to a mapping device, as input for mapping of a venue in which the marker is located based on the output.

38. A device for automatically mapping a venue based on information collected from user devices, the user devices being in communication with the device via a network, the device including:

a database;

a network interface for communication with the user devices;

a processor, functionally associated with the network interface and the database; and

a non-transitory storage medium storing instructions to be executed by the processor, the non-transitory storage medium having stored:

(a) instructions to receive information about user motion within the venue, the information including at least some information based on user processing at least two visual markers disposed at points of interest in the venue;

(b) instructions to identify a path traversed by multiple users in the venue;

(c) instructions to connect paths identified by execution of instructions (b) to form a path layout for the venue;

(d) instruction to orient the path layout relative to the north; and

(e) instructions to generate a map of paths in the venue, that are usable by users, to assist in future user navigation of the venue,

wherein, the map of paths in the venue includes multiple path segments, and each path segment is associated with accessibility information indicating accessibility of the path segment to people with different preferences or abilities.

39. The device of exemplary embodiment 38, wherein the instructions to receive information about user motion within the venue include instructions to receive information from at least one sensor of a user device operated by the user moving around the venue, the at least one sensor being selected from the group consisting of an image sensor, a network sensor, a pressure sensor, a magnetic field sensor, an orientation sensor, an accelerometer, a gyroscope, an inertial measurement unit, a proximity sensor, an ultrasonic sensor, a microphone, a GPS receiver, a Bluetooth transceiver, a Wi-Fi transceiver, a LiDAR sensor, an infrared sensor, and a radar sensor.

40. The device of exemplary embodiment 39, wherein:

the instructions to identify a path, and the instructions to connect paths to form a path layout include instructions to form multiple layers of path layouts, a first layer being formed based on the information of user processing of the one or more markers, and each additional layer being formed based on information from a different one of the at least one sensor of the user device; and
the instructions to generate the map of paths include instructions to fuse the multiple layers of path layouts to a single map of paths.

41. The device of any one of exemplary embodiments 38 to 40, wherein the at least some information based on user processing of one or more markers includes timestamps at which the one or more markers were processed.

42. The device of any one of exemplary embodiments 38 to 41, wherein the instructions to receive information include instructions to receive images captured by the user device during user motion within the venue, and further include instructions to identify objects within the image, which objects are indicative of an accessibility aspect of a path traversed by the user during the user motion.

43. The device of any one of exemplary embodiments 38 to 42, wherein the instructions to identify a path include instructions to update a confidence measure of a potential path each time the potential path is traversed by another user, that has not previously traversed the potential path, and to identify the path as a valid path when the confidence measure exceeds a predetermined path-threshold.

44. The device of any one of exemplary embodiments 38 to 43, wherein the instructions to identify a path include instructions to identify a path between two of the at least two markers.

45. The device of any one of exemplary embodiments 38 to 44, wherein the instructions to identify a path include instructions to identify an accessibility aspect of the path, or of each of multiple portions of the path.

46. The device of any one of exemplary embodiments 38 to 45, wherein the venue is an indoor venue, and the instructions to orient the path layout relative to the north include instructions to orient the path layout based on GPS input received from the user device when the path includes an entrance or an exit into the venue.

47. The device of any one of exemplary embodiments 38 to 46, wherein the venue is an indoor venue, and the instructions to orient the path layout relative to the north include instructions to orient the path layout based on publicly available information relating to the orientation of an exterior of the venue.

48. The device of any one of exemplary embodiments 38 to 47, wherein the instructions to generate the map include instructions to evaluate whether a critical mass of paths is included in the path layout, and to generate the map only following the inclusion of the critical mass of paths.

49. The device of any one of exemplary embodiments 38 to 48, wherein the storage medium further has stored:

instructions to periodically or intermittently receive additional information relating to the venue; and
instructions to update the update the map based on additional information.

50. The device of exemplary embodiment 49, wherein the instructions to receive the additional information include instructions to receive additional information from a client associated with the venue.

51. The device of any one of exemplary embodiments 49 to 50, wherein the instructions to receive the additional information include instructions to receive additional information relating to an interior arrangement of the venue, or to a change in the interior arrangement.

52. The device of any one of exemplary embodiments 49 to 51, wherein the instructions to receive the additional information include:

instructions to prompt a client associated with the venue for the additional information; and

instructions to receive, from a client device associated with the client, the additional information.

53. The device of exemplary embodiment 52, wherein the instructions to prompt include instructions to prompt the client to provide textual information, and the instructions to receive the additional information include instructions to receive the additional information in text form.

54. The device of exemplary embodiment 52 or exemplary embodiment 53, wherein the instructions to prompt include instructions to prompt the client to move around the venue while holding the client device, and the instructions to receive the additional information include instructions to receive the additional information from at least one sensor forming part of the client device.

55. A computer implemented method of automatically mapping a venue based on information collected from user devices during motion of corresponding users within the venue, the computer implemented method including:

(a) receiving information about user motion within the venue, the information including at least some information based on user processing at least two visual markers disposed at points of interest in the venue;

(b) identifying a path traversed by multiple users in the venue, the path being associated with at least one accessibility aspect;

(c) connecting identified paths to form a path layout for the venue;

(d) orienting the path layout relative to the north; and

(e) generating a map of paths in the venue, that are usable by users, to assist in future user navigation of the venue,

wherein, the map of paths in the venue includes multiple path segments, and each path segment is associated with accessibility information indicating accessibility of the path segment to people with different preferences or abilities.

56. The computer implemented method of exemplary embodiment 55, wherein receiving information about user motion within the venue includes receiving information from at least one sensor of a user device operated by the user moving around the venue, the at least one sensor being selected from the group consisting of an image sensor, a network sensor, a pressure sensor, a magnetic field sensor, an orientation sensor, an accelerometer, a gyroscope, an inertial measurement unit, a proximity sensor, an ultrasonic sensor, a microphone, a GPS receiver, a Bluetooth transceiver, a Wi-Fi transceiver, a LiDAR sensor, an infrared sensor, and a radar sensor.

57. The computer implemented method of exemplary embodiment 56, wherein:

identify the path and connecting the paths to form the path layout include identifying the paths in multiple layers and forming multiple layers of path layouts, a first layer being formed based on the information of user processing of the one or more markers, and each additional layer being formed based on information from a different one of the at least one sensor of the user device; and

generating the map of paths includes fusing the multiple layers of path layouts to a single map of paths.

58. The computer implemented method of any one of exemplary embodiments 55 to 57, wherein the at least some information based on user processing of one or more markers includes timestamps at which the one or more markers were processed.

59. The computer implemented method of any one of exemplary embodiments 55 to 58, wherein receiving the information includes receiving images captured by the user device during user motion within the venue, and identifying objects within the images, which objects are indicative of an accessibility aspect of a path traversed by the user during the user motion.

60. The computer implemented method of any one of exemplary embodiments 55 to 59, wherein identifying the path includes updating a confidence measure of a potential path each time the potential path is traversed by another user that has not previously traversed the potential path, and identifying the path as a valid path when the confidence measure exceeds a predetermined path-threshold.

61. The computer implemented method of any one of exemplary embodiments 55 to 60, wherein identifying the path includes identifying a path between two of the at least two markers.

62. The computer implemented method of any one of exemplary embodiments 55 to 61, wherein the venue is an indoor venue, and orienting the path layout relative to the north includes orienting the path layout based on GPS input received from the user device when the path includes an entrance or an exit into the venue.

63. The computer implemented method of any one of exemplary embodiments 55 to 61, wherein the venue is an indoor venue, and orienting the path layout relative to the north includes orienting the path layout based on publicly available information relating to the orientation of an exterior of the venue.

64. The computer implemented method of any one of exemplary embodiments 55 to 63, wherein generating the map includes evaluating whether a critical mass of paths is included in the path layout, and generating the map only following the inclusion of the critical mass of paths.

65. The computer implemented method of any one of exemplary embodiments 55 to 64, further including:

> periodically or intermittently receiving additional information relating to the venue; and
> updating the map based on additional information.

66. The computer implemented method of exemplary embodiment 65, wherein receiving the additional information includes receiving additional information from a client associated with the venue.

67. The computer implemented method of any one of exemplary embodiments 65 to 66, wherein receiving the additional information includes receiving additional information relating to an interior arrangement of the venue, or to a change in the interior arrangement.

68. The computer implemented method of any one of exemplary embodiments 65 to 67, wherein receiving the additional information includes:

> prompting a client associated with the venue for the additional information; and
> receiving, from a client device associated with the client, the additional information.

69. The computer implemented method of exemplary embodiment 68, wherein the prompting includes prompting the client to provide textual information, and the receiving the additional information includes receiving the additional information in textual or verbal form.

70. The computer implemented method of exemplary embodiment 68 or exemplary embodiment 69, wherein the prompting includes prompting the client to move around the venue while holding the client device, and the receiving of the additional information includes receiving the additional information from at least one sensor forming part of the client device.

71. A device for automatically assisting in user navigation within a venue, the device being in communication with a user device via a network, the device including:

> a database storing a path-map of the venue and a location aware language model;
> a network interface for communication with the user device;
> a processor, functionally associated with the network interface and the database; and
> a non-transitory storage medium storing instructions to be executed by the processor, the non-transitory storage medium having stored:
>
>> (a) instructions to receive user input, the user input including a request for instructions for navigation within the venue as well as information relating to an accessibility requirement of the user;
>> (b) instructions to compute, based on the path map of the venue and on input provided by the user, a path between two points within the venue, the path being optimized to the accessibility requirement of the user; and
>> (c) instructions to provide to the user the path between the two points within the venue, via an output interface of the user device.

72. The device of exemplary embodiment 71, wherein the storage medium further has stored instructions to estimate a current location of the user within the venue.

73. The device of exemplary embodiment 71 or exemplary embodiment 72, wherein the storage medium further has stored instructions to track user motion along the path between the two points within the venue, and to continually or periodically, provide to the user, via the output interface of the user device, updates and/or corrections relating to the path.

74. The device of any one of exemplary embodiments 71 to 73, wherein the instructions to receive the user input include instructions to receive, as the user input, an input assuming that the user's current location is a starting point of the navigation within the venue.

75. The device of any one of exemplary embodiments 71 to 73, wherein the instructions to receive the user input include instructions to receive, as the user input, a list of points of interest within the venue, and the instructions to compute the path include instructions to compute a path navigating to all the points of interest in the list.

76. The device of any one of exemplary embodiments 71 to 75, wherein the instructions to receive the user input include instructions to receive the user input in natural language, and the instructions to compute the path include instructions to process the user input using the location aware language model to extract beginning and end points of the instructions for navigation requested by the user.

77. The device of any one of exemplary embodiments 71 to 76, wherein the map stored in the database is a map formed using the computer implemented method of any one of exemplary embodiments 55 to 70.

78. The device of any one of exemplary embodiments 71 to 77, wherein the storage medium further has stored:

instructions to identify that the user input is insufficient for computing the path;
instructions to provide to the user device a prompt requesting additional input from the user; and
instructions to receive from the user device, a response to the prompt requesting the additional input, and wherein the instructions to compute the path are adapted to be executed by the processor only following execution of the instructions to receive the response to the prompt.

79. A computer implemented method of automatically assisting in user navigation within a venue, using a path map of the venue and a location aware language model, the computer implemented method including:

(a) receiving user input including a request for instructions for navigation within the venue, as well as information relating to an accessibility requirement of the user;
(b) computing, based on the path map of the venue and on the user input, a path between two points within the venue, the path being optimized to the accessibility requirement of the user; and
(c) providing to the user the path between the two points within the venue, via an output interface of the user device.

80. The computer implemented method of exemplary embodiment 79, further including estimating a current location of the user within the venue.

81. The computer implemented method of exemplary embodiment 79 or exemplary embodiment 80, further including tracking user motion along the path between the two points within the venue, and continually or periodically providing to the user, via the output interface of the user device, updates and/or corrections relating to the path.

82. The computer implemented method of any one of exemplary embodiments 79 to 81, wherein receiving the user input includes receiving, as the user input, an input assuming that the user's current location is a starting point of the navigation within the venue.

83. The computer implemented method of any one of exemplary embodiments 79 to 82, wherein receiving the user input includes receiving, as the user input, a list of points of interest within the venue, and computing the path includes computing a path navigating to all the points of interest in the list.

84. The computer implemented method of any one of exemplary embodiments 79 to 83, wherein receiving the user input includes receiving the user input in natural language, and computing the path includes processing the user input using the location aware language model to extract beginning and end points of the instructions for navigation requested by the user.

85. The computer implemented method of any one of exemplary embodiments 79 to 84, wherein the path map is a map formed using the computer implemented method of any one of exemplary embodiments 55 to 70.

86. The computer implemented method of any one of exemplary embodiments 79 to 85, further including:

identifying that the user input is insufficient for computing the path;
providing to the user device a prompt requesting additional input from the user; and
receiving from the user device, a response to the prompt requesting the additional input, and
wherein computing the path occurs following receiving the response to the prompt.

In the context of the present application, the term "client" relates to an owner or operator of a venue, or of a portion of a venue, where markers are to be placed, or where products are manufactured that have markers associated therewith (e.g. printed thereon).

In the context of the present application, the term "user" relates to a person seeking information about, or navigating within, a facility, for example using the markers of the disclosed technology or the user interaction methods of the disclosed technology.

It is to be appreciated that the same person may be a client in some contexts, and a user in other contexts. For example, the owner of a supermarket may be a client with respect to placement of markers within his supermarket. The same supermarket owner would be a user when navigating through the Museum of Natural History in NYC.

It is appreciated that certain features of the disclosed technology, which are, for clarity, described in the context of separate embodiments, may also be provided in combination in a single embodiment. Conversely, various features of the disclosed technology, which are, for brevity, described in the context of a single embodiment, may also be provided separately or in any suitable subcombination or as suitable in any other described embodiment of the disclosed technology. Certain features described in the context of various embodiments are not to be considered essential features of those embodiments, unless the embodiment is inoperative without those elements.

Although the disclosed technology has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

Citation or identification of any reference in this application shall not be construed as an admission that such reference is available as prior art to the disclosed technology.

Section headings are used herein to ease understanding of the specification and should not be construed as necessarily limiting.

**Claims**

1.  A marker for facilitating the navigation of an indoor space by a visually impaired user of a user-operated device, the marker being placeable in the indoor space and comprising a plurality of non-quadrilinear tessellating cells, each of the cells being in a color selected from a color palette of the marker, the color palette having N colors, where N is at least three; and wherein the colors of the cells encode a computer-readable numeric identifier associated with the marker, whereby the user can first make a visual identification of the marker and then scan it with their device to facilitate navigation of the indoor space.

2.  A marker according to claim 1, wherein the cells consist of a plurality of subsets of cells, including: a corner cells subset located at the corners of the marker, such that at least one corner cell is colored in each of the colors of the color palette.

3.  A marker according to claim 2, wherein the plurality of subsets of cells further includes one or more of: an identifier subset encoding the numeric identifier in base N format; a checksum subset including cells encoding validation data relating to the cells in the identifier subset; and a redundant subset including redundant cells, each matching, in its color, one of the corner cells; and preferably the marker further comprises a background surrounding the cells having a background color; and a frame surrounding the background, the frame being in a frame color that highly contrasts with the background color.

4.  A marker for indoor navigation, the marker being printed on a printing substrate and associated with information stored in a database, the key to the information stored in the database being a decimal code, the marker comprising:

    a plurality of non-quadrilinear tessellating cells, each of the cells being in a color selected from a color palette of the marker, the color palette having N colors, where N is at least three;
    a background surrounding the cells; and
    a frame surrounding the background, the frame being in a color that highly contrasts with the background, wherein the plurality of cells is divided into a corner cells subset, a first subset, a second subset, and a third subset, each of the subsets being mutually exclusive from all the other subsets, and wherein:

        the corner cells subset includes cells at the corners of the marker, such that at least one corner cell is colored in each of the colors of the color palette,
        the first subset includes cells encoding a numeric identifier in base N, which can be decoded for accessing the information associated with the marker and stored in the database;
        the second subset includes checksum cells encoding validation data based on the cells in the first subset; and
        the third subset includes redundant cells, each of the redundant cells matching, in its color, one of the corner cells.

5.  The marker of any one of claims 2-4, wherein the sequence of colors of the corner cells, when following a pre-designated sequence, encodes a physical length of the marker.

6.  The marker of any one of claims 1-5, wherein the physical length of the marker is stored in the database and can be accessed using the numeric identifier.

7.  The marker of any one of claims 1 to 6, wherein the non-quadrilinear tessellating cells comprise hexagonal cells, arranged in rows.

8.  The marker of any one of claims 1 to 7, wherein the marker has a specific physical length, selected from a pre-defined group of possible physical lengths, and wherein the specific physical length of the marker corresponds to a distance at which the marker is to be decoded.

9. A method of obtaining information about a point of interest near a user, the information being associated with a marker disposed at the point of interest and stored in a database, the marker being a marker according to any one of claims 1 to 8, the method comprising:

   (a) receiving an image of the vicinity of the user;
   (b) identifying the presence of a marker within the image;
   (c) correcting the marker projection in the captured image;
   (d) obtaining perceived dimensions of the marker, within the captured image;
   (e) obtaining physical dimensions of the marker;
   (f) estimating a distance of the device to the marker, and an angle of the device relative to the marker, based on the perceived dimensions of the marker and the physical dimensions of the marker;
   (g) decoding the marker to obtain the numerical identifier in base N;
   (h) converting the numerical identifier in base N to the decimal code;
   (i) using the decimal code to extract the information associated with the marker from the database; and
   (j) providing to the user, via an output interface of a user device, the information associated with the marker, as well as an estimate of the user's distance to the marker and angle relative to the marker.

10. The method of claim 9, wherein obtaining the perceived dimensions of the marker comprises:

    identifying the corner cells of the marker;
    fitting the corner cells of the marker into an ellipse; and
    computing the size of the long axis of the ellipse and the short axis of the ellipse, in pixels, to obtain perceived dimensions of the marker.

11. The method of claim 9 or claim 10, wherein obtaining physical dimensions of the marker comprises:

    identifying corner cells of the marker;
    obtaining color values of the corner cells;
    forming a sequence of the color values of the corner cells, the sequence following a pre-defined order of the corner cells; and
    obtaining physical dimensions of the marker that are mapped to the sequence.

12. The method of any one of claims 9 to 11, further comprising:

    determining a rotational orientation of the marker; and
    when the rotational orientation of the marker is different from an expected orientation thereof, rotating the image or the marker in the image prior to decoding the marker.

13. The method of any one of claims 9 to 12, further comprising carrying out at least one of the steps of:

    (i) transmitting identifier data encoding the numeric identifier relating to the marker;
    (ii) transmitting location data encoding at least one aspect of the location of the marker, or at least one aspect of the location of the user;
    (iii) receiving additional data relating to the location of the marker or user, and transmitting the additional data.

14. A method of creating or improving mapping data relating to an indoor space, comprising:

    receiving identifier data encoding a numeric identifier relating to a marker as claimed in any one of claims 1 to 8 within the indoor space;
    receiving location data encoding at least one aspect of the location of the marker, or at least one aspect of the location of a user who has scanned the marker; and
    processing at least the received identifier data and the received location data, optionally in conjunction with additional data relating to the indoor space, to create or improve mapping data representing a map of the indoor space.

15. A user-operated device for obtaining information about a point of interest near a user, the information being associated

**EP 4 660 585 A2**

with a marker disposed at the point of interest and stored in a database, the marker being a marker according to any one of claims 1 to 8, the device comprising:

an image capturing sensor adapted to capture an image of the marker;
an output interface adapted to provide output to the user, the output including at least some of the information;
a processor, functionally associated with the image capturing sensor, the output interface, and the database; and
a non-transitory storage medium including computer program instructions which, when executed by the processor, cause the device to carry out a method of any one of claims 9 to 13.

**32**

FIGURE 1A

FIGURE 1B

FIGURE 2A

FIGURE 2B

160

168

168

166

164

170

166

162

**FIGURE 2C**

FIGURE 3

# FIGURE 3A

STORAGE MEDIUM          240

MARKER DETECTION MODULE          242

INSTRUCTIONS TO IDENTIFY
MARKER CANDIDATE          242a

INSTRUCTIONS TO FILTER MARKER
CANDIDATES          242b

INSTRUCTIONS TO DETECT CORNER
CELLS          242c

MARKER PROJECTION MODULE          244

PERCEIVED DIMENSIONS MODULE
246

MARKER DECODING MODULE          248

INSTRUCTIONS TO DETERMINE MARKER
SIZE AND ORIENTATION          248a

INSTRUCTIONS TO TEST MARKER
FIDELITY          248b

INSTRUCTIONS TO OBTAIN DECIMAL
CODE OF MARKER          248c

PHYSICAL ESTIMATION MODULE          250

INSTRUCTIONS TO ESTIMATE DISTANCE
TO MARKER          250a

INSTRUCTIONS TO ESTIMATE ANGLE TO
MARKER          250b

REPORTING MODULE          252

## FIGURE 4

CAPTURE IMAGES   S270

DOES IMAGE INCLUDE A MARKER CANDIDATE? S272   N

Y

IS THE MARKER CANDIDATE A VALID MARKER? S274   N

Y

IDENTIFY CORNER CELLS   S276

CORRECT PERSPECTIVE DISTORTIONS   S278

DETERMINE PERCEIVED MEASUREMENTS   S280

OBTAIN PHYSICAL MARKER SIZE   S282

DETERMINE MARKER ORIENTATION   S283

MARKER ORIENTATION S284 PROPER?

Y   N

ROTATE MARKER IMAGE   S285

ESTIMATE LOCATION OF USER RELATIVE TO MARKER   S286

TEST FIDELITY OF MARKER   S288

NORMALIZE CELL COLORS   S290

DECODE MARKER TO OBTAIN DECIMAL CODE   S292

EXTRACT POI INFORMATION FROM DATABASE   S294

PROVIDE OUTPUT TO USER   S296

## FIGURE 5

STORAGE MEDIUM          208

LOCATION AWARE USER INTERACTION MODULE          304

MAP GENERATION MODULE          302

INSTRUCTIONS TO RECEIVE          312
INFORMATION ABOUT USER MOTION

INSTRUCTIONS TO IDENTIFY PATHS
TRAVERSED BY USER          314

INSTRUCTIONS TO CONNECT
IDENTIFIED PATHS          316

INSTRUCTIONS TO ORIENT IDENTIFIED
PATHS          318

INSTRUCTIONS TO GENERATE MAP OF
THE INDOOR FACILITY BASE ON THE
PATHS          320

INSTRUCTIONS TO IMPROVE THE MAP
BASED ON ADDITIONAL CONTENT          322

INSTRUCTIONS TO RECEIVE USER INPUT
          332

INSTRUCTIONS TO IDENTIFY OR          334
ESTIMATE CURRENT USER LOCATION

INSTRUCTIONS TO OPTIMIZE A
RESPONSE FOR THE USER          336

INSTRUCTIONS TO PROVIDE OUTPUT TO
THE USER          338

INSTRUCTIONS TO TRACK USER USE OF
THE RESPONSE          340

LOCATION AWARE LANGUAGE MODEL
330

**FIGURE 6**

RECEIVE INFORMATION RELATING TO USER
MOTION WITHIN A FACILITY          **S350**

IDENTIFY A PATH          **S352**

IS THE
PATH NEW? **S354**          N

RECORD NEW PATH          **S356**

UPDATE PATH CONFIDENCE MEASURE          **S358**

CONFIDENCE
MEASURE ABOVE **S360**          N
PATH THRESHOLD?

Y

FLAG PATH AS VALID          **S362**

CONNECT VALIDATED PATHS          **S364**

ORIENT CONNECTED PATHS          **S366**

CRITICAL
**S368** MASS OF CONNECTED          N
PATHS?

Y

GENERATE COMPUTERIZED MAP OF
PATHS IN THE INDOOR FACILITY   **S370**

RECEIVE ADDITIONAL INFORMATION
RELATING TO THE FACILITY          **S372**

IMPROVE OR UDPATE THE MAP
BASED ON THE ADDITIONAL
INFORMAITON          **S374**

## FIGURE 7

PROVIDE TO A USER DEVICE A DEDICATED
USER INTERFACE                          **S402**

RECEIVE INPUT FROM THE USER          **S400**

ESTIMATE CURRENT LOCATION OF THE    **S404**
USER

SUFFICIENT
INPUT RECEIVED?        **S406**

PROVIDE TO THE USER DEVICE A PROMPT
REQUESTING ADDITIONAL INPUT          **S408**

GENERATE A RESPONSE TO THE USER'S
PROMPT                                **S410**

PROVIDE AT LEAST PART OF THE
GENERATED REPSONSE TO THE USER
DEVICE                               **S412**

ESTIMATE CURRENT LOCATION OF THE
USER                                 **S414**

NEXT **S416**
RESPONSE PORTION?

USER ON
**S418** INTENDED ROUTE?

RESPONSE
**S420** COMPLETE?

43